# EUROPÄISCHE PATENTSCHRIFT

(11) **EP 0 969 051 B1**
(45) Veröffentlichungstag und Bekanntmachung des Hinweises auf die Patenterteilung: **27.11.2002**
(21) Anmeldenummer: 99810550.6
(22) Anmeldetag: 22.06.1999
(51) Int. Cl.: C09B 67/22, C09B 62/453, C09B 62/513

(54) **Mischungen von Reaktivfarbstoffen und deren Verwendung**
Mixtures of reactive dyes and their utilisation
Mélanges de colorants réactifs et leur utilisation

(30) Priorität: 30.06.1998 EP 98810607
(43) Veröffentlichungstag der Anmeldung: 05.01.2000
(73) Patentinhaber: Ciba Specialty Chemicals Holding Inc., 4057 Basel (CH)
(72) Erfinder: Lehmann, Urs, 4057 Basel (CH)

(56) Entgegenhaltungen:
- EP-A- 0 063 276
- EP-A- 0 122 600
- EP-A- 0 559 617
- EP-A- 0 731 145
- EP-A- 0 827 987
- EP-A- 0 870 807
- DE-A- 3 113 989
- US-A- 3 558 592
- US-A- 4 885 360
- US-A- 5 554 733

## Beschreibung

Die vorliegende Erfindung betrifft Mischungen von Reaktivfarbstoffen, die insbesondere zum Färben oder Bedrucken von stickstoffhaltigen oder hydroxygruppenhaltigen Fasermaterialien geeignet sind und dabei Färbungen oder Drucke mit guten Allgemeinechtechtheiten ergeben.

Die EP-A-0 731 145 und die EP-A-0 827 987 offenbaren schwarzfärbende Farbstoffmischungen, welche reaktive Disazofarbstoffe zusammen mit reaktiven Monoazofarbstoffen enthalten.

Gegenstand der vorliegenden Erfindung sind somit Farbstoffmischungen, welche dadurch gekennzeichnet sind, dass sie mindestens einen Reaktivfarbstoff der Formeln (1) und (2) 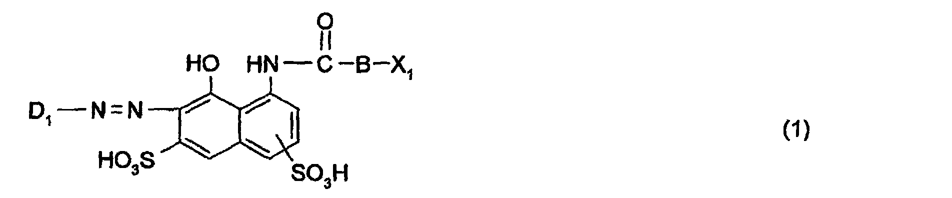 und 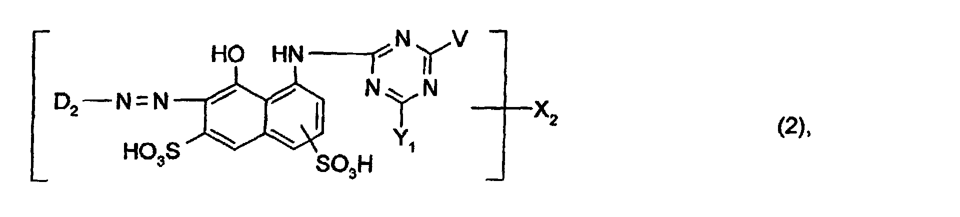 worin
B unsubstituiertes oder durch C₁-C₄-Alkyl, C₁-C₄-Alkoxy, C₂-C₄-Alkanoylamino, Amino oder Halogen substituiertes Phenylen,
D₁ und D₂ unabhängig voneinander gegebenenfalls durch C₁-C₄-Alkyl, C₁-C₄-Alkoxy, C₂-C₄-Alkanoylamino, Sulfo oder einen faserreaktiven Rest der nachfolgend angegebenen Formel (3a), (3b), (3c) oder (3d) substituiertes Phenyl oder Naphthyl,
V Amino, gegebenfalls im Phenylring durch C₁-C₄-Alkyl, C₁-C₄-Alkoxy, C₂-C₄-Alkanoylamino, Hydroxy, Carboxy, Sulfo oder Halogen substituiertes Phenylamino oder N-C₁-C₄-Alkyl-N-phenylamino, gegebenenfalls im Alkylteil durch C₂-C₄-Alkanoylamino, C₁-C₄-Alkoxy, Hydroxy, Sulfo, Sulfato oder Carboxy substituiertes N-Mono- oder N,N-Di-C₁-C₄-Alkylamino, gegebenfalls im Cycloalkylring durch C₁-C₄-Alkyl substituiertes C₅-C₇-Cycloalkylamino oder gegebenenfalls weitere Heteroatome enthaltende N-Heterocyclen,
X₁ und X₂ unabhängig voneinander jeweils einen faserreaktiven Rest der Formel

-NH-CO-CH(Hal)-CH₂-Hal (3a)

oder

-NH-CO-C(Hal)=CH₂ (3b),

wobei Hal Halogen ist, und
Y₁ Halogen bedeuten;
zusammen mit mindestens einem Reaktivfarbstoff der Formeln (4), (5) und (6) 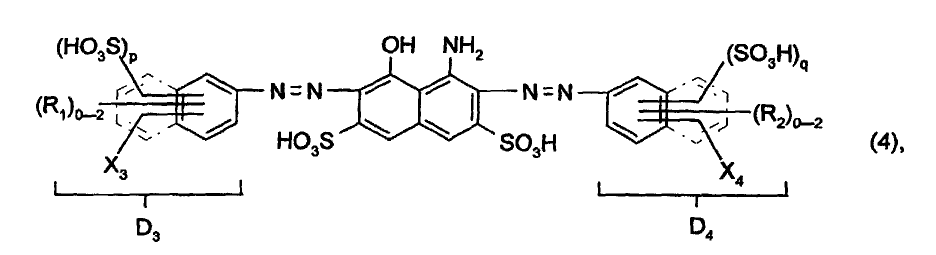 worin
(R₁)₀₋₂ und (R₂)₀₋₂ unabhängig voneinander für 0 bis 2 gleiche oder voneinander verschiedene Substituenten ausgewählt aus der Gruppe C₁-C₄-Alkyl und C₁-C₄-Alkoxy stehen,
p und q unabhängig voneinander jeweils die Zahl 0, 1 oder 2,
X₃ und X₄ unabhängig voneinander jeweils Wasserstoff oder ein faserreaktiver Rest der Formel (3a), (3b), (3c), (3d) oder (3e)

-NH-CO-CH(Hal)-CH₂-Hal (3a),

-NH-CO-C(Hal)=CH₂ (3b),

-SO₂-Z (3c),

-CO-NH-(CH₂)₂₋₃-SO₂-Z (3d)

oder 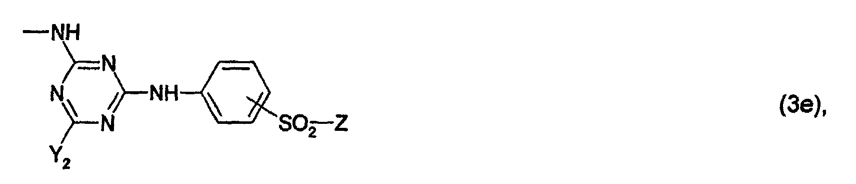 sind, und Hal und Y₂ Halogen, Z ein Rest der Formel -CH₂CH₂-U oder -CH=CH₂ und U -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ ist, 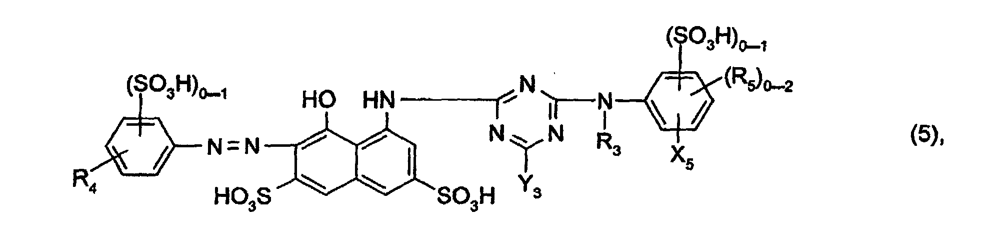 worin
R₃ Wasserstoff oder C₁-C₄-Alkyl,
R₄ gegebenenfalls im Phenylring durch C₁-C₄-Alkyl, C₁-C₄-Alkoxy, Nitro, Halogen oder Sulfo substituiertes Phenylamino,
(R₅)₀₋₂ für 0 bis 2 gleiche oder voneinander verschiedene Substituenten ausgewählt aus der Gruppe C₁-C₄-Alkyl und C₁-C₄-Alkoxy stehen,
X₅ einen faserreaktiven Rest der Formel (3a), (3b), (3c) oder (3d) und
Y₃ Halogen bedeuten, und 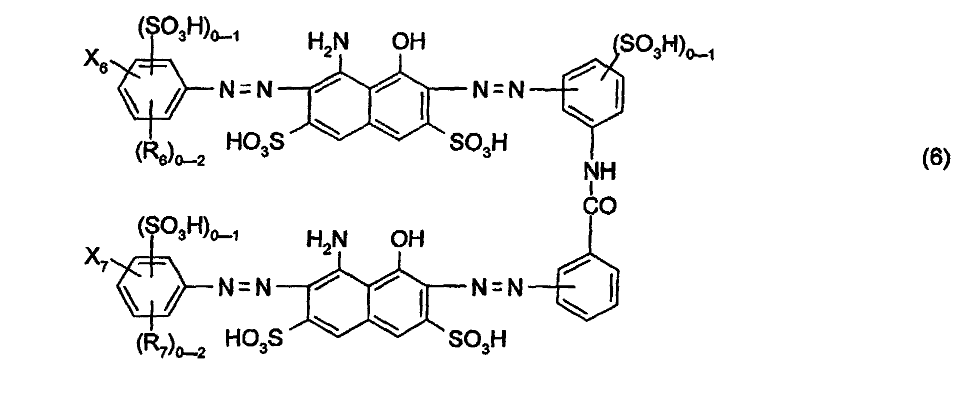 enthalten, worin
(R₆)₀₋₂ und (R₇)₀₋₂ unabhängig voneinander für 0 bis 2 gleiche oder voneinander verschiedene Substituenten ausgewählt aus der Gruppe C₁-C₄-Alkyl und C₁-C₄-Alkoxy stehen und
X₆ und X₇ unabhängig voneinander jeweils einen faserreaktiven Rest der Formel (3a), (3b), (3c) oder (3d) bedeuten,
mit der Massgabe, dass die Farbstoffmischungen keine wesentliche Menge eines Reaktivfarbstoffs der Formel 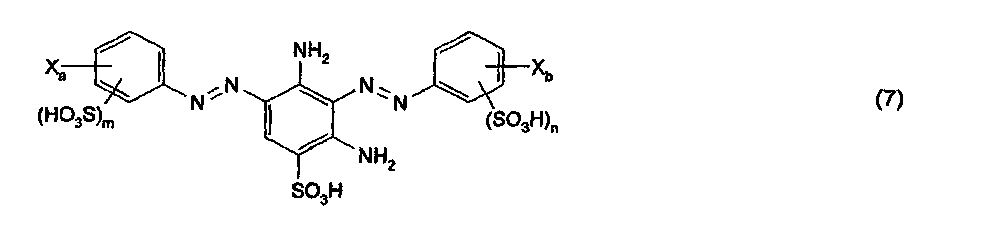 enthalten, worin
Xₐ und X_{b} unabhängig voneinander α,β-Dibrompropionylamino oder β-Sulfatoethylsulfonyl sind und die Summe von m und n 0 oder 1 ist,
falls die Farbstoffmischungen einen Farbstoff der Formel 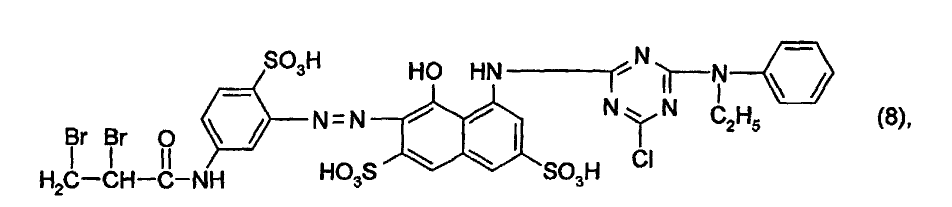 zusammen mit mindestens einem der beiden Farbstoffe der Formel (4) enthalten, worin p und q jeweils 0,
R₁ und R₂ Wasserstoff und
X₃ und X₄ β-Sulfatoethylsulfonyl sind, oder
p und q jeweils 1,
R₁ und R₂ Wasserstoff und
X₃ und X₄ α,β-Dibrompropionylamino bedeuten, wobei
die Reste D₃ und D₄ der Farbstoffe der Formel (4) Phenylreste sind.

Bevorzugt ist B unsubstituiertes Phenylen.

Bevorzugt bedeuten D₁ und D₂ unabhängig voneinander gegebenenfalls durch C₁-C₄-Alkyl, C₁-C₄-Alkoxy, C₂-C₄-Alkanoylamino, Sulfo oder einen faserreaktiven Rest der Formel (3a), (3b), (3c) oder (3d) substituierten Phenylrest.

Besonders bevorzugt bedeuten D₁ und D₂ unabhängig voneinander gegebenenfalls durch Sulfo oder einen faserreaktiven Rest der Formel (3a) oder (3b) substituiertes Phenyl. Insbesondere ist der Phenylrest D₁ und D₂ durch Sulfo und einen Rest der Formel (3a) oder (3b) substituiert.

In den erfindungsgemässen Farbstoffmischungen ist V Amino; gegebenfalls im Phenylring durch C₁-C₄-Alkyl, wie z.B. Methyl oder Ethyl, C₁-C₄-Alkoxy, wie z.B. Methoxy oder Ethoxy, C₂-C₄-Alkanoylamino, wie z.B. Acetylamino oder Propionylamino, Hydroxy, Carboxy, Sulfo oder Halogen, wie z.B. Chlor oder Brom, vorzugsweise Chlor, substituiertes Phenylamino oder N-C₁-C₄-Alkyl-N-phenylamino, wie z.B. N-Methyl-N-phenylamino oder N-Ethyl-N-phenylamino; gegebenenfalls im Alkylteil durch C₂-C₄-Alkanoylamino, wie beispielsweise Acetylamino oder Propionylamino, C₁-C₄-Alkoxy, wie z.B. Methoxy oder Ethoxy, Hydroxy, Sulfo, Sulfato oder Carboxy substituiertes N-Mono- oder N,N-Di-C₁-C₄-Alkylamino, wie beispielsweise N-Methylamino, N-Ethylamino, N-Propylamino, N,N-Di-Methylamino oder N,N-Di-Ethylamino, N-β-Hydroxyethylamino und N,N-Di-β-Hydroxyethylamino; gegebenfalls im Cycloalkylring durch C₁-C₄-Alkyl, wie z.B. Methyl oder Ethyl, vorzugsweise Methyl, substituiertes C₅-C₇-Cycloalkylamino oder gegebenenfalls weitere Heteroatome enthaltende N-Heterocyclen, wie z.B. Morpholino oder Piperidin-1-yl.

Bevorzugt bedeutet V gegebenenfalls im Phenylring durch C₁-C₄-Alkyl, C₁-C₄-Alkoxy, C₂-C₄-Alkanoylamino, Halogen oder Sulfo substituiertes Phenylamino oder N-C₁-C₄-Alkyl-N-phenylamino.

Besonders bevorzugt bedeutet V gegebenenfalls im Phenylring durch Sulfo substituiertes Phenylamino oder N-C₁-C₄-Alkyl-N-phenylamino, vorzugsweise Phenylamino oder N-C₁-C₄-Alkyl-N-phenylamino und insbesondere N-Ethyl-N-phenylamino.

Hal in den faserreaktiven Resten der Formeln (3a) und (3b) steht bevorzugt für Chlor oder Brom, insbesondere Brom.

Y₁ und Y₃ in den Farbstoffen der Formeln (2) und (5) und Y₂ in dem faserreaktiven Rest der Formel (3e) sind unabhängig voneinander Fluor, Chlor oder Brom, insbesondere Chlor.

Als C₁-C₄-Alkyl kommen für R₁, R₂, R₄, R₅, R₆ und R₇ unabhängig voneinander z.B. Methyl, Ethyl, Propyl, Isopropyl, Butyl, sek.-Butyl, tert.-Butyl oder Isobutyl, vorzugsweise Methyl oder Ethyl und insbesondere Methyl, in Betracht.

Als C₁-C₄-Alkyl kommt für R₃ z.B. Methyl, Ethyl, Propyl, Isopropyl, Butyl, sek.-Butyl, tert.-Butyl oder Isobutyl, insbesondere Methyl oder Ethyl, in Betracht.

Als C₁-C₄-Alkoxy kommen für R₁, R₂, R₄, R₅, R₆ und R₇ unabhängig voneinander z.B. Methoxy, Ethoxy, Propoxy, Isopropoxy, Butoxy oder Isobutoxy, vorzugsweise Methoxy oder Ethoxy und insbesondere Methoxy, in Betracht.

In den erfindungsgemässen Farbstoffmischungen sind die Reste D₃ und D₄ des Reaktivfarbstoffs der Formel (4) bevorzugt Phenylreste.

Bevorzugt sind p und q unabhängig voneinander 0 oder 1.

Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Bevorzugt ist mindestens einer der Reste X₃ und X₄ im Reaktivfarbstoff der Formel (4) ein Rest der Formel (3a), (3b), (3c), (3d) oder (3e). Besonders bevorzugt sind X₃ und X₄ unabhängig voneinander jeweils ein Rest der Formel (3a), (3b), (3c) oder (3e), insbesondere der Formel (3a), (3b) oder (3c). Bedeuten X₃ und X₄ jeweils einen faserreaktiven Rest der Formel (3a) oder (3b), so bedeutet Hal vorzugsweise Brom.

Als C₁-C₄-Alkyl kommt für R₃ im Reaktivfarbstoff der Formel (5) z.B. Methyl, Ethyl, Propyl, Isopropyl, Butyl, sek.-Butyl, tert.-Butyl oder Isobutyl, vorzugsweise Methyl oder Ethyl, in Betracht.

R₃ im Reaktivfarbstoff der Formel (5) ist vorzugsweise Wasserstoff.

R₄ Phenylamino im Reaktivfarbstoff der Formel (5) ist unsubstituiert oder im Phenylring durch C₁-C₄-Alkyl, wie z.B. Methyl oder Ethyl, C₁-C₄-Alkoxy, wie z.B. Methoxy oder Ethoxy, Nitro, Halogen oder Sulfo substituiert. Vorzugsweise ist R₄ Phenylamino im Phenylring unsubstituiert.

R₄ ist vorzugsweise in para-Position zur Azogruppe gebunden.

R₅ im Reaktivfarbstoff der Formel (5) ist vorzugsweise Wasserstoff.

X₅ im Reaktivfarbstoff der Formel (5) ist bevorzugt ein faserreaktiver Rest der Formel (3c) oder (3d).

Als Reaktivfarbstoff der Formel (5) kommt beispielsweise ein Farbstoff der Formel (5a) 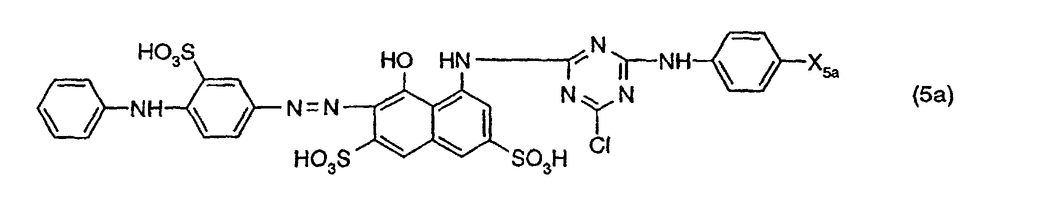 in Betracht, worin X₅ₐ β-Sulfatoethylsulfonyl, Vinylsulfonyl oder ein faserreaktiver Rest der Formel (3d) ist, wobei Z die oben angegebenen Bedeutungen hat und U -Cl oder -OSO₃H ist.

Die Reste X₆ und X₇ im Reaktivfarbstoff der Formel (6) sind bevorzugt unabhängig voneinander jeweils ein Rest der Formel (3a), (3b) oder (3c), insbesondere der Formel (3c). Bedeuten X₆ und X₇ jeweils einen faserreaktiven Rest der Formel (3a) oder (3b), so bedeutet Hal vorzugsweise Brom.

R₆ und R₇ im Reaktivfarbstoff der Formel (6) sind vorzugsweise Wasserstoff.

Als Reaktivfarbstoff der Formel (6) kommt beispielsweise ein Farbstoff der Formel (6a) 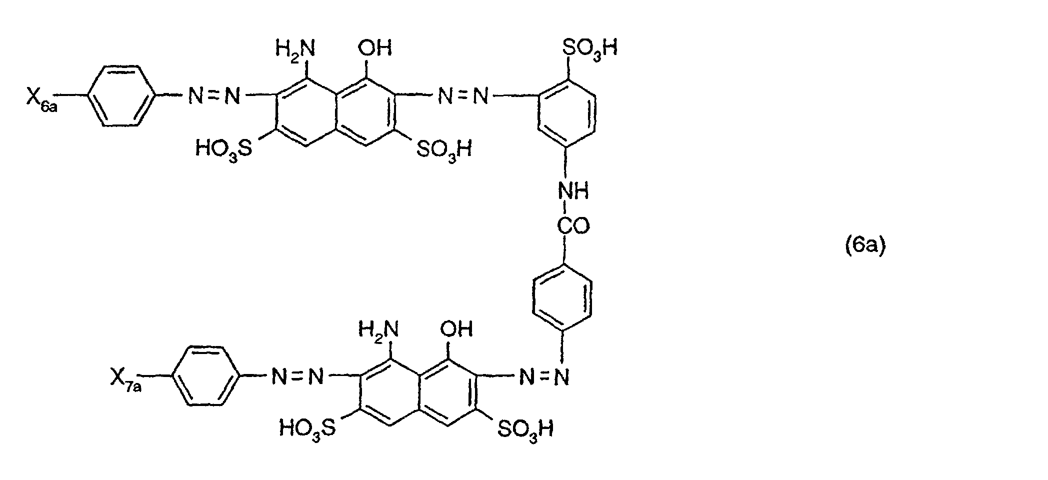 in Betracht, worin X₆ₐ und X₇ₐ unabhängig voneinander β-Sulfatoethylsulfonyl oder Vinylsulfonyl bedeuten.

Bevorzugt enthalten die erfindungsgemässen Farbstoffmischungen mindestens einen Reaktivfarbstoff der Formeln (1) und (2) zusammen mit mindestens einem Reaktivfarbstoff der Formel (4).

Besonders bevorzugt enthalten die erfindungsgemässen Farbstoffmischungen mindestens einen Reaktivfarbstoff der Formeln (1a) und (2a) 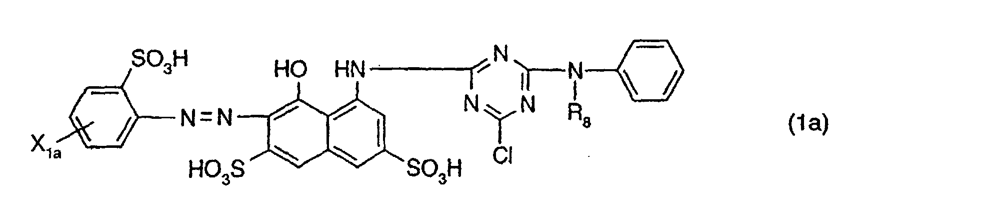 und 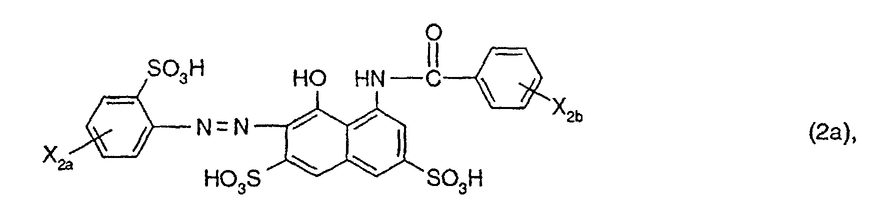 worin
X₁ₐ, X₂ₐ und X_{2b} unabhängig voneinander α,β-Dibrompropionylamino oder α-Bromacryloylamino sind und R₈ Wasserstoff, Methyl oder Ethyl, vorzugsweise Ethyl, bedeuten, zusammen mit mindestens einem Reaktivfarbstoff der Formeln (4a), (4b) und (4c), insbesondere der Formel (4a), 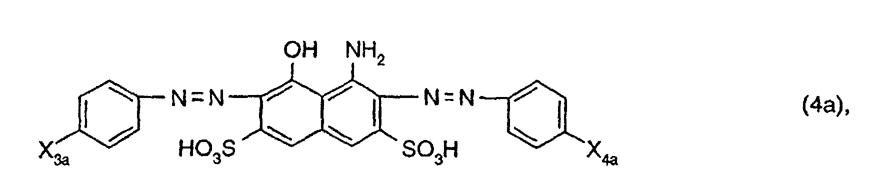 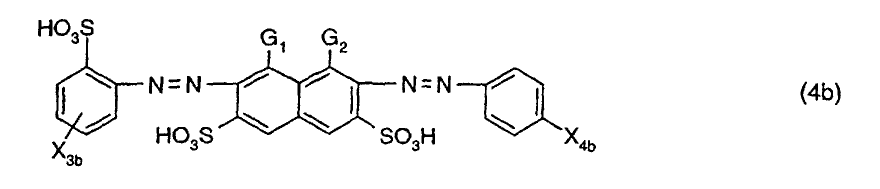 und 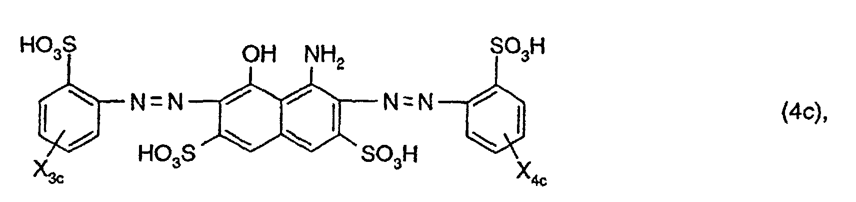 worin
einer der Substituenten G₁ und G₂ Amino und der andere Hydroxy bedeutet, X₃ₐ, X₄ₐ und X_{4b} unabhängig voneinander β-Sulfatoethylsulfonyl oder Vinylsulfonyl und X_{3b}, X_{3c} und X_{4c} unabhängig voneinander α,β-Dibrompropionylamino oder α-Bromacryloylamino sind.

In den Reaktivfarbstoffen der Formeln (1a) und (2a) befinden sich die faserreaktiven Reste X₁ₐ und X₂ₐ unabhängig voneinander bevorzugt in meta- oder para-Position, insbesondere in meta-Position, zur Azogruppe. Der faserreaktive Rest X_{2b} im Reaktivfarbstoff der Formel (2a) befindet sich vorzugsweise in para-Position.

In den Reaktivfarbstoffen der Formeln (4b) und (4c) befinden sich die faserreaktiven Reste X_{3b}, X_{3c} und X_{4c} unabhängig voneinander bevorzugt in meta- oder para-Position zur Azogruppe.

In einer besonders bevorzugten Ausführungsform enthalten die erfindungsgermässen Farbstoffmischungen zusätztlich mindestens einen Reaktivfarbstoff der Formel (9) 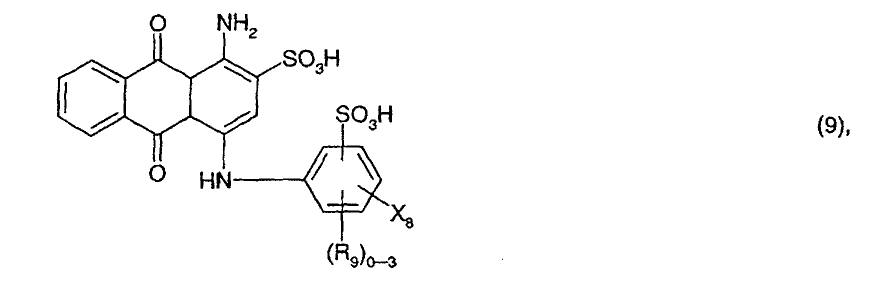 worin
(R₉)₀₋₃ für 0 bis 3 gleiche oder voneinander verschiedene Substituenten ausgewählt aus der Gruppe C₁-C₄-Alkyl und C₁-C₄-Alkoxy steht und
X₈ einen Rest der Formel (3a) oder (3b), vorzugsweise α,β-Dibrompropionylamino oder α-Bromacryloylamino und insbesondere α-Bromacryloylamino, bedeutet.

Als C₁-C₄-Alkyl kommen für R₉ z.B. Methyl, Ethyl, Propyl, Isopropyl, Butyl, sek.-Butyl, tert.-Butyl oder Isobutyl, vorzugsweise Methyl oder Ethyl und insbesondere Methyl, in Betracht.

Als C₁-C₄-Alkoxy kommen für R₉ z.B. Methoxy, Ethoxy, Propoxy, Isopropoxy, Butoxy oder lsobutoxy, vorzugsweise Methoxy oder Ethoxy und insbesondere Methoxy, in Betracht.

(R₉)₀₋₃ steht vorzugsweise für 0 bis 3 C₁-C₄-Alkylreste und insbesondere für 0 und 3 Methylreste.

Als Farbstoffmischungen, die zusätzlich mindestens einen Reaktivfarbstoff der Formel (9) enthalten kommen beispielsweise Farbstoffmischungen in Betracht, die als Farbstoff der Formel (9) eine Mischung der Reaktivfarbstoffe der Formeln (9a) und (9b) 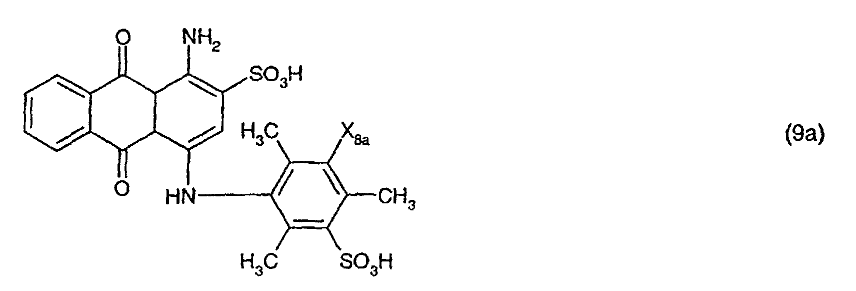 und 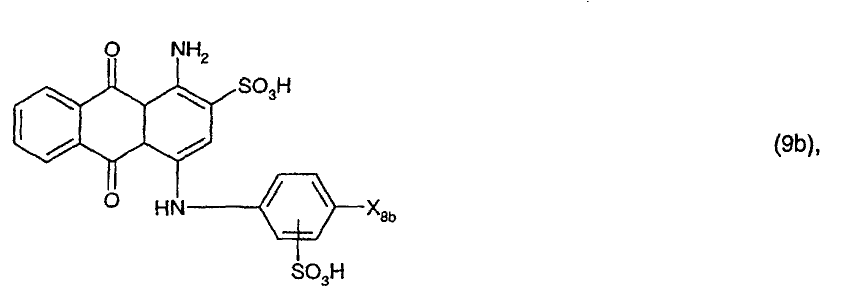 zusammen mit einem Reaktivfarbstoff der Formel (1a) und einem Reaktivfarbstoff der Formel (4c), oder solche die als Farbstoff der Formel (9) einen Reaktivfarbstoff der Formel (9a) zusammen mit einem Reaktivfarbstoff der Formel (1a) und den Reaktivfarbstoffen der Formeln (4a) und (4c) enthalten, worin R₈ Ethyl, X₁, X_{3c}, X_{4c}, X₈ₐ und X_{8b} unabhängig voneinander α,β-Dibrompropionylamino oder α-Bromacryloylamino und X₃ₐ und X₄ₐ unabhängig voneinander β-Sulfatoethylsulfonyl oder Vinylsulfonyl bedeuten.

Die erfindungsgemässen Farbstoffmischungen können neben den oben genannten Reaktivfarbstoffen weitere Farbstoffe, insbesondere weitere Reaktivfarbstoffe zur Nuancierung, enthalten.

Unter wesentlichen Mengen an Reaktivfarbstoffen der Formel (7) sind z.B. Mengen oberhalb von 5 Gewichtsprozent, bezogen auf das Gesamtgewicht der Farbstoffmischung, zu verstehen.

In einer bevorzugten Ausführungsform enthalten die erfindungsgemässen Farbstoffmischungen keinen Reaktivfarbstoff der Formel (7).

Die Reaktivfarbstoffe der Formeln (1), (2), (5), (6) und (9) sind bekannt oder können in Analogie zu bekannten Verfahren erhalten werden. Die Reaktivfarbstoffe der Formel (4) sind teilweise bekannt. Die den erfindungsgemässen Farbstoffmischungen zugrundeliegenden Reaktivfarbstoffe sind beispielsweise in der US-A-3,558,592, US-A-5,554,733, US-A-4,885,360 und US-A-4,917,705 beschrieben.

Die Reaktivfarbstoffe der Formeln (1), (2), (4), (5), (6) und (9) enthalten Sulfogruppen, welche jeweils entweder in Form der freien Sulfosäure oder vorzugsweise als deren Salz, z.B. als Natrium-, Lithium-, Kalium-, Ammoniumsalz oder als Salz eines organischen Amins, z.B. als Triethanolammoniumsalz, vorliegen. Die Reaktivfarbstoffe der Formeln (1), (2), (4), (5), (6) und (9) und somit auch die Farbstoffgemische können weitere Zusätze, z.B. Kochsalz oder Dextrin, enthalten.

Die Farbstoffe der Formeln (1) oder (2) liegen in dem Farbstoffgemisch zu den Farbstoffen der Formeln (4), (5) oder (6) z.B. im Gewichtsverhältnis von 1:99 bis 99:1, vorzugsweise 5:95 bis 95:5 und besonders bevorzugt 10:90 bis 90:10, vor.

Die erfindungsgemässen Farbstoffgemische können z.B. durch Mischung der Einzelfarbstoffe hergestellt werden. Dieser Mischprozess erfolgt z.B. in geeigneten Mühlen, z.B. Kugel- oder Stiftmühlen, sowie in Knetern oder Mixern.

Die neuen Reaktivfarbstoffe der Formel (4) bilden einen weiteren Gegenstand der vorliegenden Erfindung.

Gegenstand der vorliegenden Erfindung sind somit Reaktivfarbstoffe der Formel (10) 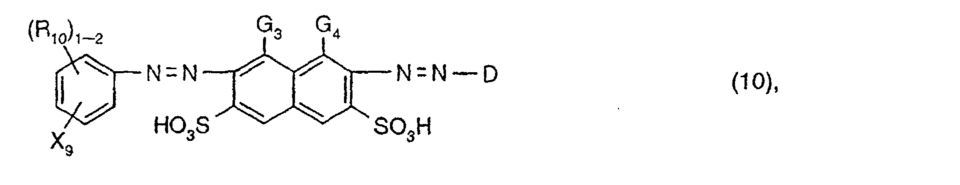 worin
D den Rest der Formel 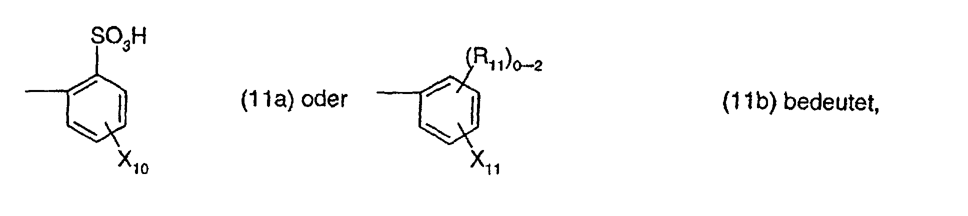 einer der Substituenten G₃ und G₄ Amino und der andere Hydroxy ist,
(R₁₀)₁₋₂ für 1 bis 2 gleiche oder voneinander verschiedene Substituenten ausgewählt aus der Gruppe C₁-C₄-Alkyl und C₁-C₄-Alkoxy und
(R₁₁)₀₋₂ für 0 bis 2 gleiche oder voneinander verschiedene Substituenten ausgewählt aus der Gruppe C₁-C₄-Alkyl und C₁-C₄-Alkoxy steht,
X₉ und X₁₁ unabhängig voneinander β-Sulfatoethylsulfonyl oder Vinylsulfonyl und
X₁₀ α,β-Dibrompropionylamino oder α-Bromacryloylamino bedeuten.

Als C₁-C₄-Alkyl kommen für R₁₀ und R₁₁ unabhängig voneinander z.B. Methyl, Ethyl, Propyl, Isopropyl, Butyl, sek.-Butyl, tert.-Butyl oder Isobutyl, vorzugsweise Methyl oder Ethyl und insbesondere Methyl, in Betracht.

Als C₁-C₄-Alkoxy kommen für R₁₀ und R₁₁ unabhängig voneinander z.B. Methoxy, Ethoxy, Propoxy, lsopropoxy, Butoxy oder lsobutoxy, vorzugsweise Methoxy oder Ethoxy und insbesondere Methoxy, in Betracht.

Im Reaktivfarbstoff der Formel (10) befinden sich die faserreaktiven Reste X₉, X₁₀ und X₁₁ unabhängig voneinander bevorzugt in meta- oder para-Position zur Azogruppe.

Ein weiterer Gegenstand der Erfindung betrifft ein Verfahren zum Färben oder Bedrucken von hydroxylgruppenhaltigen oder stickstoffhaltigen Fasermaterialien mit den erfindungsgemässen Farbstoffgemischen bzw. den erfindungsgemässen Reaktivfarbstoffen der Formel (10).

Als Fasermaterialien kommen z.B. die natürlichen Cellulosefasern, wie Baumwolle, Leinen, Jute oder Hanf, sowie modifizierte Cellulosefasern wie Zellstoff oder regenerierte Cellulose in Frage. Insbesondere eignen sich die erfindungsgemässen Farbstoffgemische bzw. Farbstoffe zum Färben oder Bedrucken von natürlichen Polyamidfasermaterialien, z.B. Seide oder Wolle, synthetischen Polyamidfasermaterialien, z.B. Polyamid 6 oder Polyamid 6.6, oder von Woll- und synthetischen Polyamidmischgeweben. Die erfindungsgemässen Farbstoffgemische bzw. Farbstoffe sind besonders geeignet zum Färben oder Bedrucken von natürlichen Polyamidfasermaterialien und hierbei insbesondere von Wolle oder von chlorierter oder waschmaschinenfest ausgerüsteter Wolle.

Das genannte Textilfasermaterial kann dabei in den verschiedensten Verarbeitungsformen vorliegen, wie z.B. als Faser, Garn, Flocke, Gewebe oder Gewirke.

Die erfindungsgemässen Farbstoffgemische bzw. Farbstoffe eignen sich für die üblichen Färbe- und Druckverfahren und lassen sich auf verschiedenste Weise auf das Fasermaterial applizieren und fixieren, insbesondere in Form von wässrigen Farbstofflösungen oder - druckpasten. Sie eignen sich sowohl für das Ausziehverfahren als auch zum Foulard-Färben, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Die erfindungsgemässen Farbstoffgemische bzw. Farbstoffe sind ebenfalls für das sogenannte Kaltverweilverfahren geeignet, wonach der Farbstoff zusammen mit dem Alkali auf dem Foulard aufgebracht wird und danach durch mehrstündiges Lagern bei Raumtemperatur fixiert wird.

Das Färben von natürlichen und synthetischen Polyamidfasermaterialien, insbesondere von Wolle, erfolgt vorzugsweise nach dem Ausziehverfahren, bei einem pH-Wert von ca. 3 bis 7, insbesondere 3 bis 5, und bei Temperaturen von z.B. 70 bis 120°C und insbesondere 90 bis 105°C.

Die Färbeflotten oder Druckpasten können ausser Wasser und den Farbstoffen der Formeln (1), (2), (4), (5) oder (6) bzw. der Formel (10) oder (12) weitere Zusätze, z.B. an sich bekannte Nuancierfarbstoffe, Salze, Puffersubstanzen, Netzmittel, Antischaummittel, Egalisiermittel oder die Eigenschaften des Textilmaterials beeinflussende Mittel, z.B. Weichmachungsmittel, Zusätze zum Flammfestausrüsten oder schmutz-, wasser- und ölabweisende Mittel sowie wasserenthärtende Mittel und natürliche oder synthetische Verdicker, z.B. Alginate oder Celluloseether, enthalten.

Die erfindungsgemässen Farbstoffgemische bzw. Farbstoffe ergeben egale Färbungen und Drucke mit guten Allgemeinechtheiten, insbesondere guter Wasch-, Reib-, Nass-, Nassreibund Lichtechtheit. Die erfindungsgemässen Farbstoffgemische bzw. Farbstoffe zeichnen sich ferner durch gleichmässigen Farbaufbau, gutes Aufziehverhalten und hohe Fixiergrade aus. Weiterhin kann bei den erfindungsgemässen Farbstoffgemischen bzw. Farbstoffen auf die sonst übliche Nachbehandlung der Färbungen und Drucke mit sogenannten Fixiermitteln verzichtet werden.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Herstellungsbeispiel 1: 24 Teile 1-Amino-5-(α,β-dibrompropionylamino)-benzol-2-sulfonsäure werden bei einer Temperatur von ca. 20°C in 176 Teilen Wasser unter Zugabe von 7 Teilen Natriumchlorid suspendiert und auf einen pH-Wert von 4,4 gestellt. Die so erhaltene Suspension wird dann durch Zugabe von 13,5 Teilen Salzsäure (32%) und 15 Teilen 4-normaler Natriumnitritlösung diazotiert. Nach ca. 4 Stunden wird überschüssiges Nitrit mit Sulfaminsäure zerstört.

Die wie oben angegeben erhaltene Suspension der Diazokomponente wird auf eine Temperatur von ca. 10°C und auf einen pH-Wert von 5 gestellt und zu einer Lösung, welche 30 Teile der in Form der freien Säure der Formel (101) 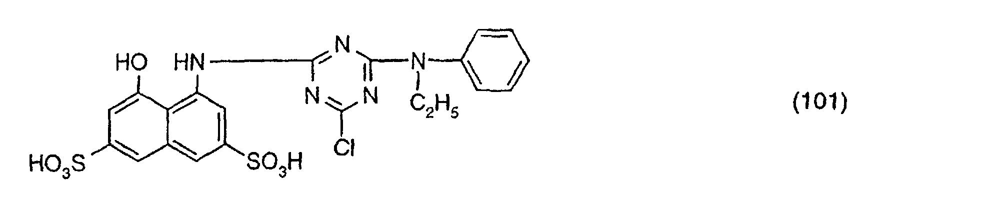 entsprechenden Verbindung in 280 Teilen Wasser enthält und auf einen pH-Wert von 5 gestellt ist, innerhalb von ca. 30 Minuten zulaufengelassen. Hierbei wird der pH durch Zugabe von wässriger Natriumhydroxidlösung bei einem Wert von 5 gehalten. Anschliessend wird die Reaktionslösung bei Raumtemperatur gerührt, bis kein Diazoniumsalz mehr nachweisbar ist, und das Produkt durch Zugabe von Natriumchlorid ausgesalzen. Nach Filtration, Nachwaschen mit wässriger Natriumchloridlösung und Trocknung erhält man einen Farbstoff, der in Form der freien Säure der Verbindung der Formel (102) 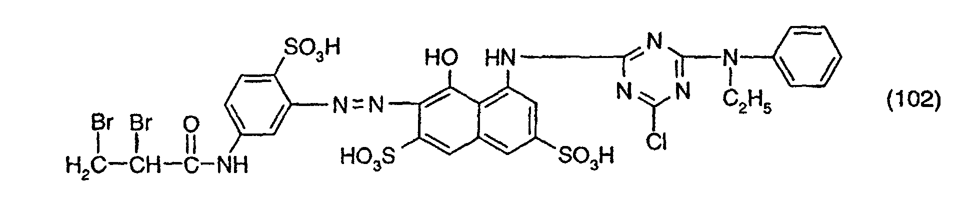 entspricht. Der Farbstoff der Formel (102) färbt Wolle und Polyamid in roten Farbtönen. Die Verbindung der Formel (101) wird durch schrittweise Kondensation von Cyanurchlorid mit 1-Amino-8-hydroxynaphthalin-3,6-disulfonsäure und N-Ethylanilin analog der in der US-A-5,554,733 beschriebenen Vorgehensweise erhalten.

Herstellungsbeispiel 2: Zu 73,2 Teilen der in 600 Teilen Wasser gelösten Kupplungskomonente der Formel (103) 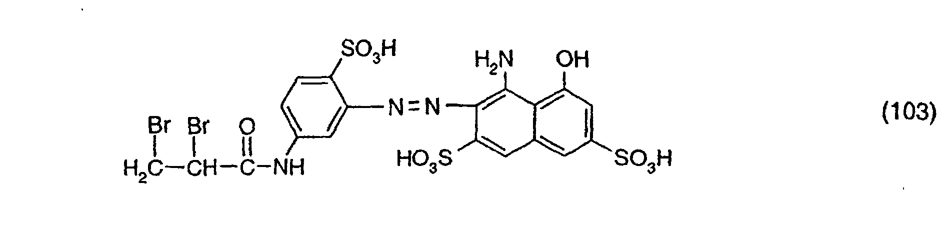 (hergestellt durch saure Kupplung von diazotierter 1-Amino-5-(α,β-dibrompropionylamino)-benzol-2-sulfonsäure auf 1-Amino-8-hydroxynaphthalin-3,6-disulfonsäure) wird bei 0 bis 5°C eine Mischung von 28,1 Teilen diazotiertem 1-Amino-4-(β-sulfatoethylsulfonyl)-benzol mit 300 Teilen Wasser zugegeben. Nach vollständiger Kupplungsreaktion bei pH 5,5 bis 6,5 wird das Produkt durch Zugabe von Natriumchlorid ausgesalzen. Nach Filtration, Nachwaschen mit wässriger Natriumchloridlösung und Trocknung erhält man einen Farbstoff, der in Form der freien Säure der Verbindung der Formel (104) 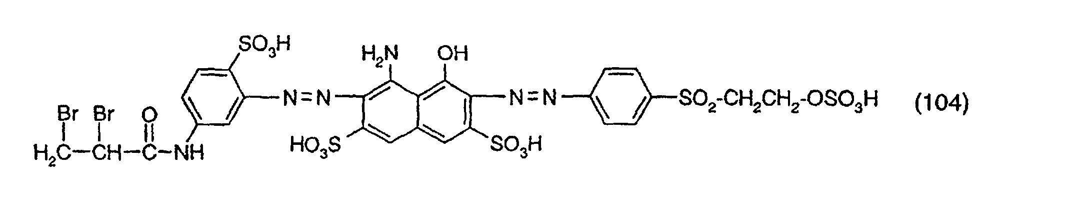 entspricht. Der Farbstoff der Formel (104) färbt Wolle und Polyamid in blauen Farbtönen.

Herstellungsbeispiele 3 bis 7: Verfährt man gemäss den Angaben in Herstellungsbeispiel 2 und kuppelt zunächst statt 1-Amino-5-(α,β-dibrompropionylamino)-benzol-2-sulfonsäure die äquivalente Menge der in Tabelle 1, Spalte 2 unter (i) angegebenen diazotierten Diazokomponente sauer auf 1-Amino-8-hydroxynaphthalin-3,6-disulfonsäure und auf die so erhaltene Monoazoverbindung statt 1-Amino-4-(β-sulfatoethylsulfonyl)-benzol die äquivalente Menge der in Tabelle 1, Spalte 2 unter (ii) angegebenen diazotierten Diazokomonente, so erhält man die in Tabelle 1, Spalte 3 angegebenen Reaktivfarbstoffe, die in Form der freien Säure den Verbindungen der nachfolgend angegebenen Formeln entsprechen und Wolle und Cellulose in blauen Farbtönen färben.

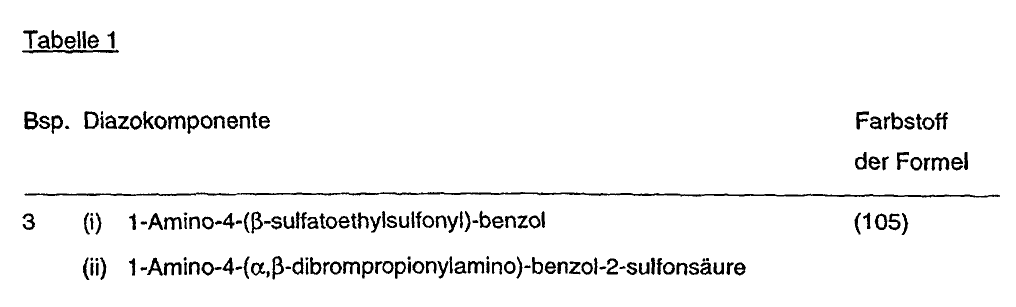

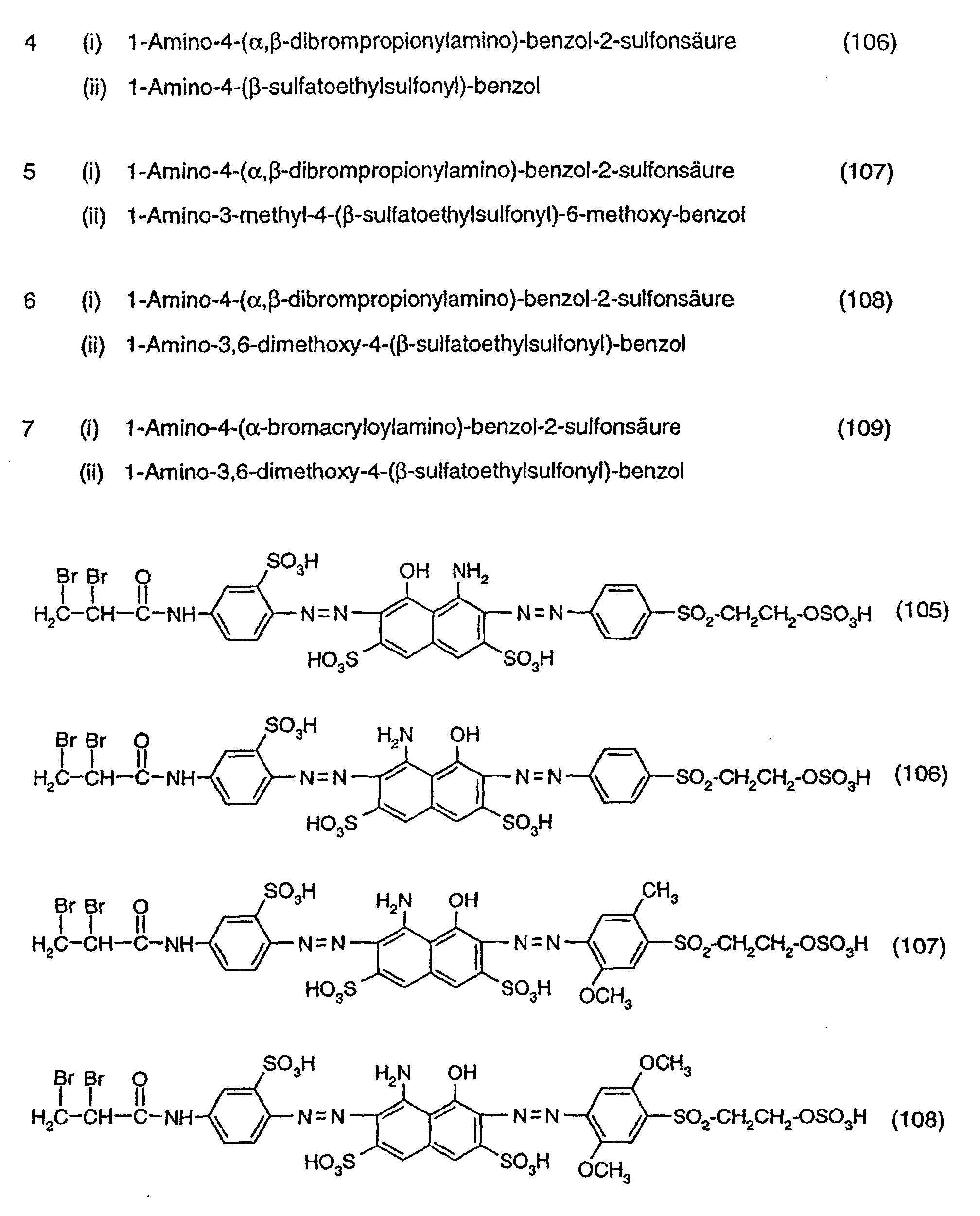

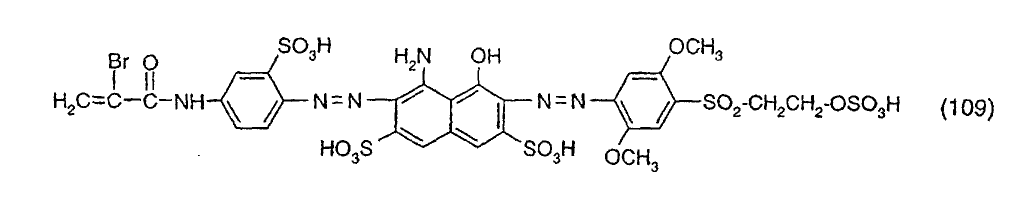

Färbebeispiel 1: 10 Teile Wollgewebe werden in einem Laborfärbeapparat mit folgender Flotte gefärbt:
0,1 Teile Natriumacetat,
0,2 Teile eines handelsüblichen Egalisiermittels (Albegal B®),
0,08 Teile des rotfärbenden Farbstoffs der Formel (102),
0,32 Teile des blaufärbenden Farbstoffs der Formel (105),
200 Volumenteile Wasser und eine ausreichende Menge
80%-iger Essigsäure, so dass der pH der Flotte 4,5 beträgt.

Das Textilmaterial wird in der Färbeflotte 10 Minuten bei 40°C behandelt und dann mit einer Aufheizrate von 1°C/min auf 70°C erwärmt. Anschliessend wird die Flotte 20 Minuten bei 70°C gehalten und dann mit einer Aufheizrate von 1°C/min auf Kochtemperatur (98°C) erwärmt und 90 Minuten bei dieser Temperatur gefärbt. Nach dem Abkühlen der Flotte auf 70°C wird die Färbung wie üblich gespült und fertiggestellt. Man erhält eine faser- und flächenegale marineblaue Färbung mit guten Echtheitseigenschaften.

Färbebeispiele 2 bis 6: Verfährt man wie in Färbebeispiel 1 angegeben, verwendet jedoch anstelle von 0,08 Teilen des rotfärbenden Farbstoffs der Formel (102) und 0,32 Teilen des blaufärbenden Farbstoffs der Formel (105) die in der folgenden Tabelle 2 in Spalte 2 angegebenen Mengen dieser Farbstoffe, sowie die weiteren dort genannten Farbstoffe in den angegebenen Mengen, so erhält man ebenfalls faser- und flächenegale Färbungen in den angegebenen Farbtönen mit guten Echtheitseigenschaften.

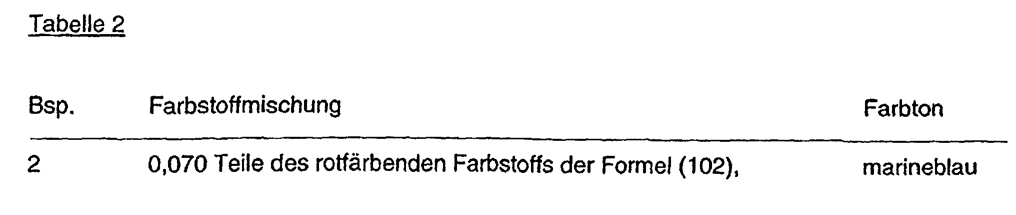

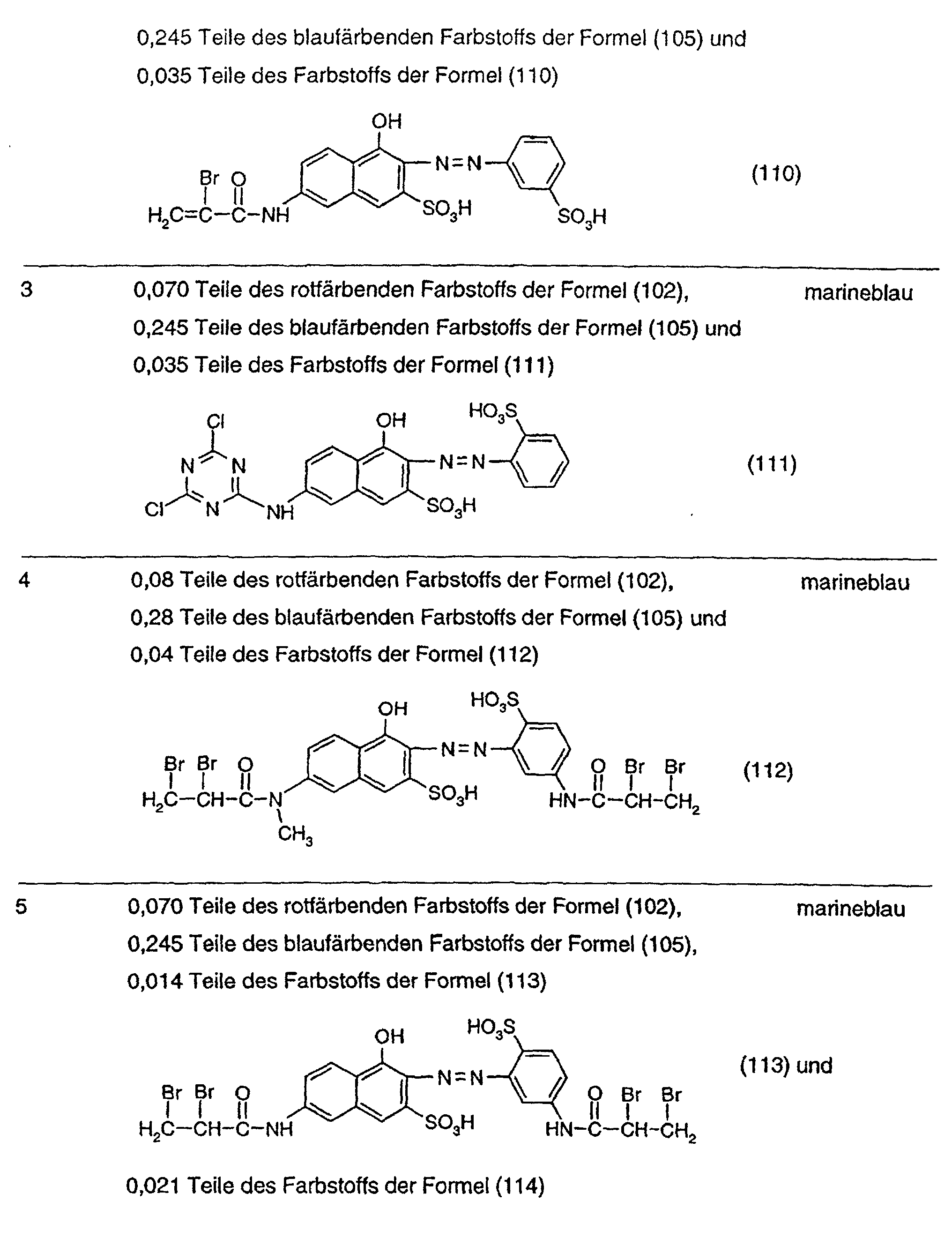

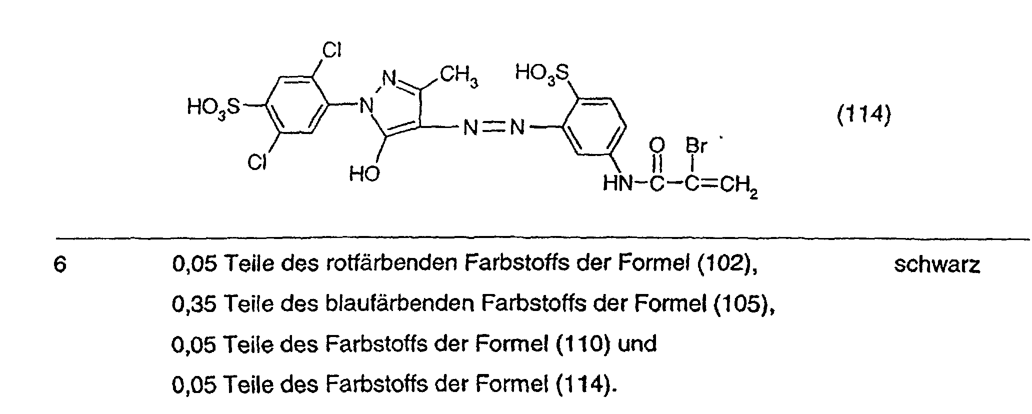

Färbebeispiele 7 bis 12: Verfährt man wie in den Färbebeispielen 1 bis 6 angegeben, verwendet jedoch jeweils anstelle des blaufärbenden Farbstoffs der Formel (105) den blaufärbenden Farbstoff der Formel (115) 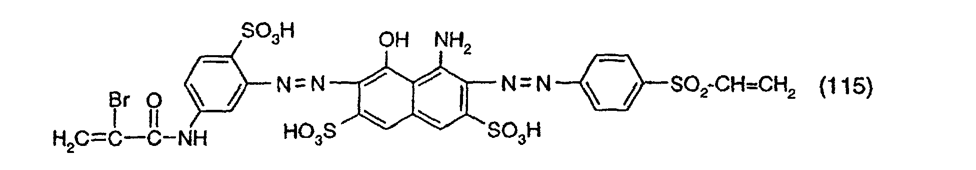 so erhält man ebenfalls faser- und flächenegale Färbungen mit guten Echtheitseigenschaften in den in Tabelle 3 in Spalte 3 angegebenen Färbtönen.

**Tabelle 3**

| Bsp. | Farbstoffmischung | Farbton |
|---|---|---|
| 7 | 0,08 Teile des rotfärbenden Farbstoffs der Formel (102) und | marineblau |
| | 0,32 Teile des blaufärbenden Farbstoffs der Formel (115) | |
| 8 | 0,070 Teile des rotfärbenden Farbstoffs der Formel (102), | marineblau |
| | 0,245 Teile des blaufärbenden Farbstoffs der Formel (115) und | |
| | 0,035 Teile des Farbstoffs der Formel (110) | |
| 9 | 0,070 Teile des rotfärbenden Farbstoffs der Formel (102), | marineblau |
| | 0,245 Teile des blaufärbenden Farbstoffs der Formel (115) und | |
| | 0,035 Teile des Farbstoffs der Formel (111) | |
| 10 | 0,08 Teile des rotfärbenden Farbstoffs der Formel (102), | marineblau |
| | 0,28 Teile des blaufärbenden Farbstoffs der Formel (115) und | |
| | 0,04 Teile des Farbstoffs der Formel (112) | |
| 11 | 0,070 Teile des roffärbenden Farbstoffs der Formel (102), | marineblau |
| | 0,245 Teile des blaufärbenden Farbstoffs der Formel (115), | |
| | 0,014 Teile des Farbstoffs der Formel (113) und | |
| | 0,021 Teile des Farbstoffs der Formel (114) | |
| 12 | 0,05 Teile des roffärbenden Farbstoffs der Formel (102), | schwarz |
| | 0,35 Teile des blaufärbenden Farbstoffs der Formel (115), | |
| | 0,05 Teile des Farbstoffs der Formel (110) und | |
| | 0,05 Teile des Farbstoffs der Formel (114) | |

Färbebeispiele 13 bis 18: Verfährt man wie in den Färbebeispielen 1 bis 6 angegeben, verwendet jedoch jeweils anstelle des blaufärbenden Farbstoffs der Formel (105) den blaufärbenden Farbstoff der Formel (106), so erhält man ebenfalls faser- und flächenegale Färbungen mit guten Echtheitseigenschaften in den in Tabelle 4 in Spalte 3 angegebenen Färbtönen.

**Tabelle 4**

| Bsp. | Farbstoffmischung | Farbton |
|---|---|---|
| 13 | 0,08 Teile des rotfärbenden Farbstoffs der Formel (102) und | marineblau |
| | 0,32 Teile des blaufärbenden Farbstoffs der Formel (106) | |
| 14 | 0,070 Teile des rotfärbenden Farbstoffs der Formel (102), | marineblau |
| | 0,245 Teile des blaufärbenden Farbstoffs der Formel (106) und | |
| | 0,035 Teile des Farbstoffs der Formel (110) | |
| 15 | 0,070 Teile des rotfärbenden Farbstoffs der Formel (102), | marineblau |
| | 0,245 Teile des blaufärbenden Farbstoffs der Formel (106) und | |
| | 0,035 Teile des Farbstoffs der Formel (111) | |
| 16 | 0,08 Teile des roffärbenden Farbstoffs der Formel (102), | marineblau |
| | 0,28 Teile des blaufärbenden Farbstoffs der Formel (106) und | |
| | 0,04 Teile des Farbstoffs der Formel (112) | |
| 17 | 0,070 Teile des rotfärbenden Farbstoffs der Formel (102), | marineblau |
| | 0,245 Teile des blaufärbenden Farbstoffs der Formel (106), | |
| | 0,014 Teile des Farbstoffs der Formel (113) | |
| | 0,021 Teile des Farbstoffs der Formel (114) | |
| 18 | 0,05 Teile des rotfärbenden Farbstoffs der Formel (102), | schwarz |
| | 0,35 Teile des blaufärbenden Farbstoffs der Formel (106), | |
| | 0,05 Teile des Farbstoffs der Formel (110) | |
| | 0,05 Teile des Farbstoffs der Formel (114) | |

Färbebeispiele 19 bis 24: Verfährt man wie in den Färbebeispielen 1 bis 6 angegeben, verwendet jedoch jeweils anstelle des rotfärbenden Farbstoffs der Formel (102) den roffärbenden Farbstoff der Formel (116) 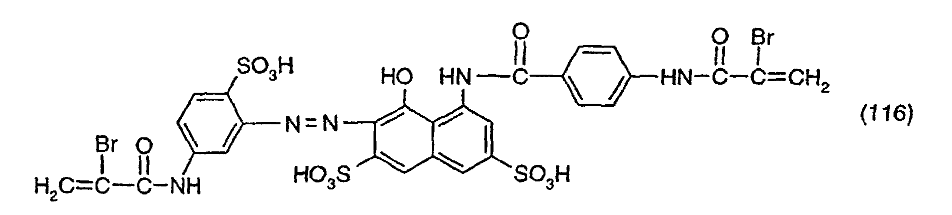 so erhält man ebenfalls faser- und flächenegale Färbungen mit guten Echtheitseigenschaften in den in Tabelle 5 in Spalte 3 angegebenen Färbtönen.

**Tabelle 5**

| Bsp. | Farbstoffmischung | Farbton |
|---|---|---|
| 19 | 0,08 Teile des roffärbenden Farbstoffs der Formel (116) und | marineblau |
| | 0,32 Teile des blaufärbenden Farbstoffs der Formel (105) | |
| 20 | 0,070 Teile des roffärbenden Farbstoffs der Formel (116), | marineblau |
| | 0,245 Teile des blaufärbenden Farbstoffs der Formel (105) und | |
| | 0,035 Teile des Farbstoffs der Formel (110) | |
| 21 | 0,070 Teile des roffärbenden Farbstoffs der Formel (116), | marineblau |
| | 0,245 Teile des blaufärbenden Farbstoffs der Formel (105) und | |
| | 0,035 Teile des Farbstoffs der Formel (111) | |
| 22 | 0,08 Teile des roffärbenden Farbstoffs der Formel (116), | marineblau |
| | 0,28 Teile des blaufärbenden Farbstoffs der Formel (105) und | |
| | 0,04 Teile des Farbstoffs der Formel (112) | |
| 23 | 0,070 Teile des rotfärbenden Farbstoffs der Formel (116), | marineblau |
| | 0,245 Teile des blaufärbenden Farbstoffs der Formel (105), | |
| | 0,014 Teile des Farbstoffs der Formel (113) und | |
| | 0,021 Teile des Farbstoffs der Formel (114) | |
| 24 | 0,05 Teile des rotfärbenden Farbstoffs der Formel (116), | schwarz |
| | 0,35 Teile des blaufärbenden Farbstoffs der Formel (105), | |
| | 0,05 Teile des Farbstoffs der Formel (110) und | |
| | 0,05 Teile des Farbstoffs der Formel (114) | |

Färbebeispiele 25 bis 28: Verfährt man wie in Färbebeispiel 1 angegeben, verwendet jedoch anstelle von 0,08 Teilen des rotfärbenden Farbstoffs der Formel (102) und 0,32 Teilen des blaufärbenden Farbstoffs der Formel (105) die in der folgenden Tabelle 6 in Spalte 2 angegebenen Mengen der dort genannten Farbstoffe, so erhält man ebenfalls faser- und flächenegale Färbungen in den angegebenen Farbtönen mit guten Echtheitseigenschaften.

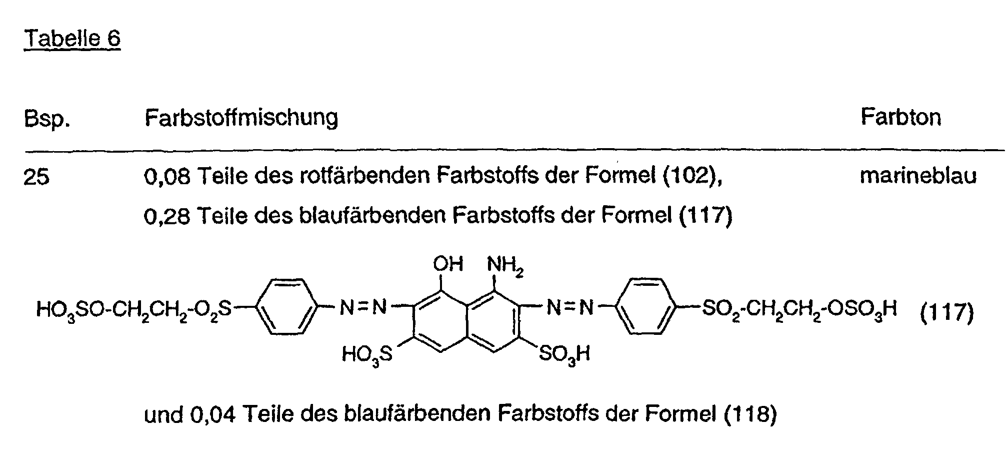

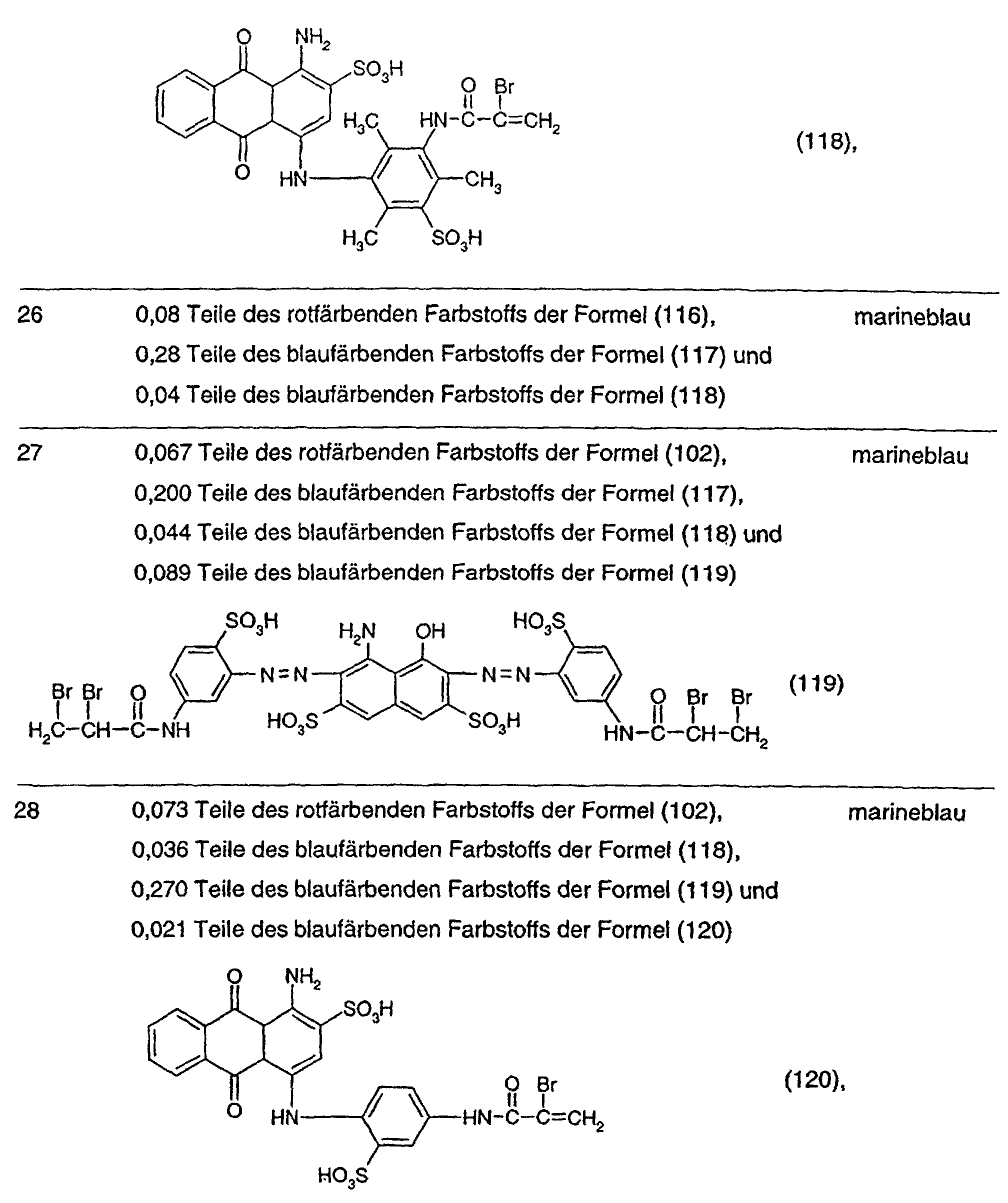

Färbebeispiel 29: Verfährt man wie im Färbebeispiel 1 beschrieben, setzt der Färbeflotte aber zusätzlich 2 Gew.-%, bezogen auf das Textilmaterial, eines handelsüblichen Wollschutzmittels (Irgasol HTW®) zu, so wird ebenfalls eine faser- und flächenegale marineblaue Färbung mit guten Echtheitseigenschaften erhalten.

Färbebeispiel 30: In ein Färbebad, welches 1,2 Teile des Farbstoffs der Formel (117), 1,2 Teile des Farbstoffs der Formel (102), 3,6 Teile des Farbstoffs der Formel (121) 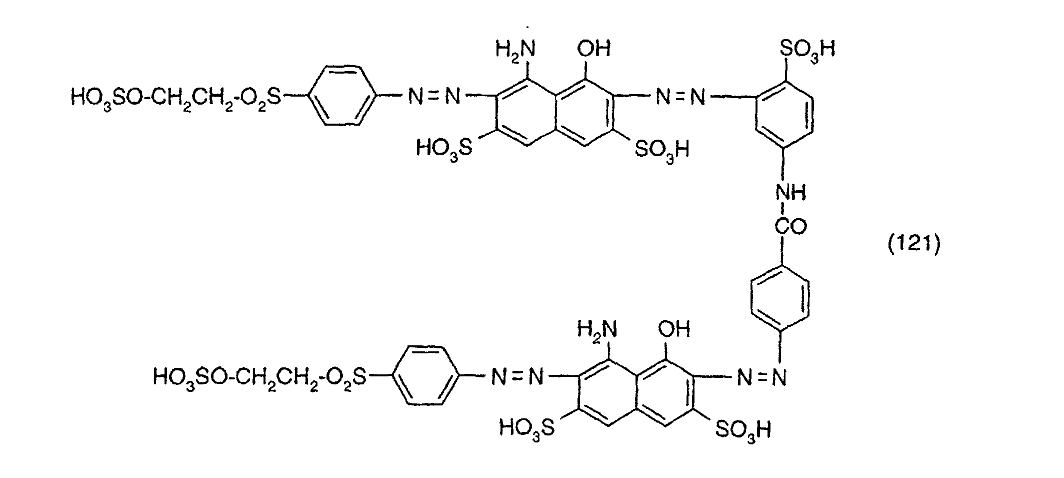 und 30 Teile Natriumchlorid in 1000 Teilen Wasser enthält, geht man bei einer Temperatur von 30°C mit 100 Teilen eines Baumwollgewebes ein. Die Temperatur des Färbebades wird innerhalb von 30 Minuten auf 90°C erhöht und weitere 45 Minuten gehalten. Anschliessend wird die Temperatur innerhalb von ca. 15 Minuten auf 70°C gesenkt, es werden 15 Teile kalziniertes Soda zugegeben, und die Temperatur des Färbebades wird weitere 45 Minuten bei 70°C gehalten. Danach wird das gefärbte Gewebe in üblicher Weise gespült und getrocknet. Man erhält eine dunkle marineblaue Färbung mit guten Echtheitseigenschaften.

Färbebeispiel 31: In ein Färbebad, welches 2,7 Teile des Farbstoffs der Formel (117), 0,9 Teile des Farbstoffs der Formel (102), 2,4 Teile des Farbstoffs der Formel (122) 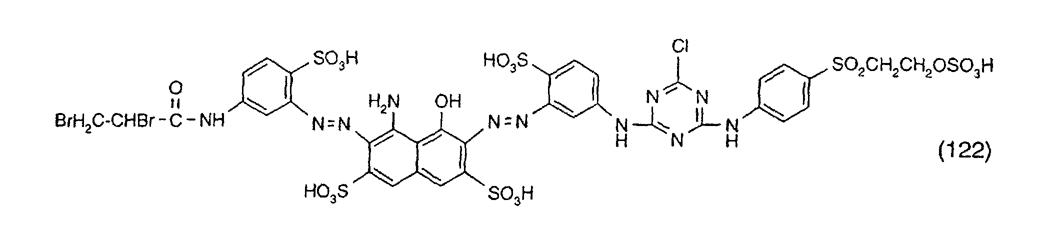 und 90 Teile Natriumchlorid in 1000 Teilen Wasser enthält, geht man bei einer Temperatur von 30°C mit 100 Teilen eines Baumwollgewebes ein. Die Temperatur des Färbebades wird 20 Minuten gehalten und dann innerhalb von ca. 40 Minuten auf 80°C erhöht. Anschliessend werden 20 Teile kalziniertes Soda zugegeben, und die Temperatur des Färbebades wird weitere 45 Minuten bei 80°C gehalten. Danach wird das gefärbte Gewebe in üblicher Weise gespült und getrocknet. Man erhält eine dunkle marineblaue Färbung mit guten Echtheitseigenschaften.

Färbebeispiele 32 und 33: Verfährt man wie in Färbebeispiel 31 angegeben, verwendet jedoch anstelle von 2,7 Teilen des Farbstoffs der Formel (117), 0,9 Teilen des Farbstoffs der Formel (102) und 2,4 Teilen des Farbstoffs der Formel (122) die in der folgenden Tabelle 7 in Spalte 2 angegebenen Mengen der dort genannten Farbstoffe, so erhält man ebenfalls Färbungen in den angegebenen Farbtönen mit guten Echtheitseigenschaften.

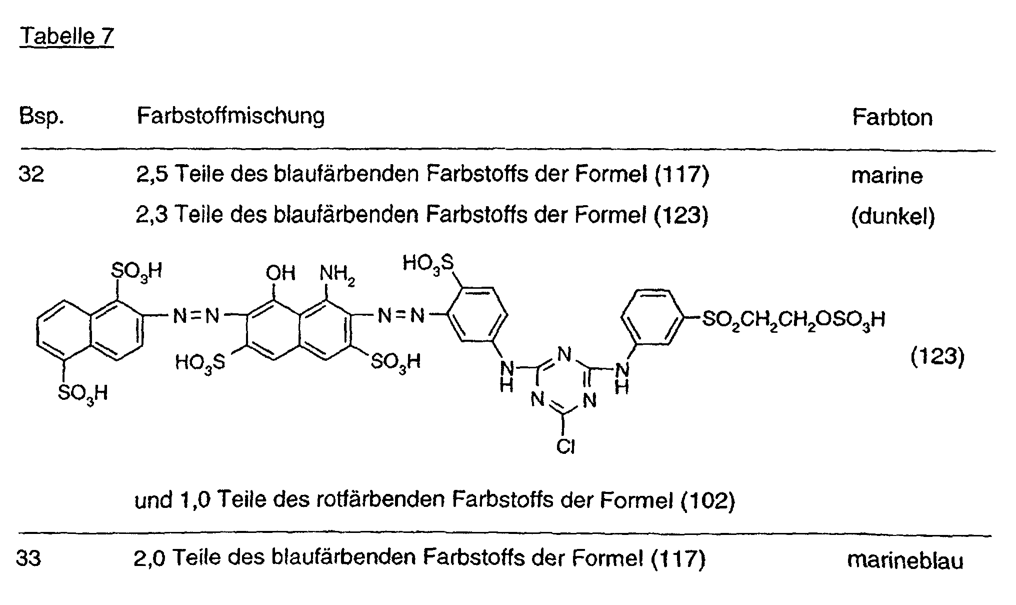

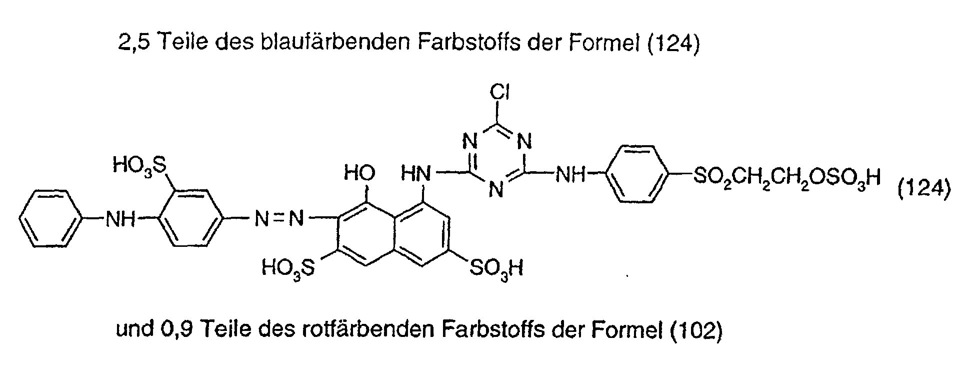

## Patentansprüche

1. Farbstoffmischungen, **dadurch gekennzeichnet, dass** sie mindestens einen Reaktivfarbstoff der Formeln (1) und (2) 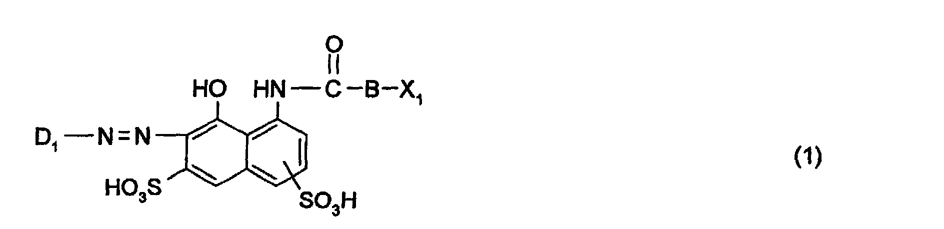 und 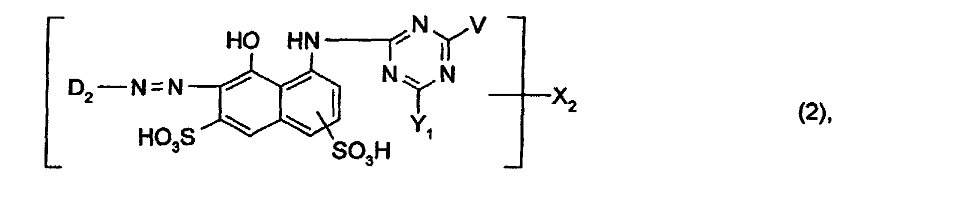 worin
B unsubstituiertes oder durch C₁-C₄-Alkyl, C₁-C₄-Alkoxy, C₂-C₄-Alkanoylamino, Amino oder Halogen substituiertes Phenylen,
D₁ und D₂ unabhängig voneinander gegebenenfalls durch C₁-C₄-Alkyl, C₁-C₄-Alkoxy, C₂-C₄-Alkanoylamino, Sulfo oder einen faserreaktiven Rest der nachfolgend angegebenen Formel (3a), (3b), (3c) oder (3d) substituiertes Phenyl oder Naphthyl,
V Amino, gegebenfalls im Phenylring durch C₁-C₄-Alkyl, C₁-C₄-Alkoxy, C₂-C₄-Alkanoylamino, Hydroxy, Carboxy, Sulfo oder Halogen substituiertes Phenylamino oder N-C₁-C₄-Alkyl-N-phenylamino, gegebenenfalls im Alkylteil durch C₂-C₄-Alkanoylamino, C₁-C₄-Alkoxy, Hydroxy, Sulfo, Sulfato oder Carboxy substituiertes N-Mono- oder N,N-Di-C₁-C₄-Alkylamino, gegebenfalls im Cycloalkylring durch C₁-C₄-Alkyl substituiertes C₅-C₇-Cycloalkylamino oder gegebenenfalls weitere Heteroatome enthaltende N-Heterocyclen,
X₁ und X₂ unabhängig voneinander jeweils einen faserreaktiven Rest der Formel
-NH-CO-CH(Hal)-CH₂-Hal (3a)
oder
-NH-CO-C(Hal)=CH₂ (3b),
wobei Hal Halogen ist, und
Y₁ Halogen bedeuten;
zusammen mit mindestens einem Reaktivfarbstoff der Formeln (4), (5) und (6) 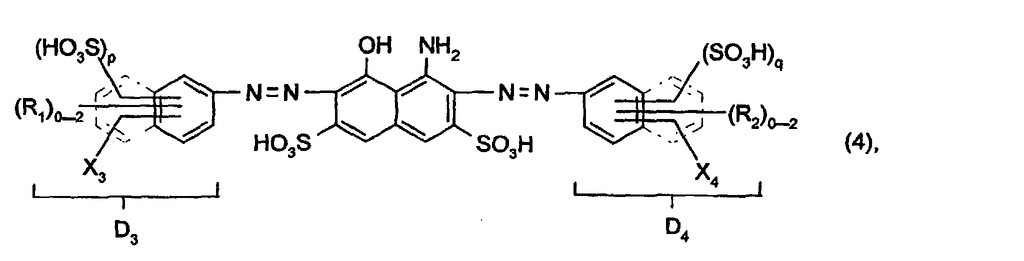 worin
(R₁)₀₋₂ und (R₂)₀₋₂ unabhängig voneinander für 0 bis 2 gleiche oder voneinander verschiedene Substituenten ausgewählt aus der Gruppe C₁-C₄-Alkyl und C₁-C₄-Alkoxy stehen,
p und q unabhängig voneinander jeweils die Zahl 0, 1 oder 2,
X₃ und X₄ unabhängig voneinander jeweils Wasserstoff oder ein faserreaktiver Rest der Formel (3a), (3b), (3c), (3d) oder (3e)
-NH-CO-CH(Hal)-CH₂-Hal (3a),
-NH-CO-C(Hal)=CH₂ (3b),
-SO₂-Z (3c),
-CO-NH-(CH₂)₂₋₃-SO₂-Z (3d)
oder 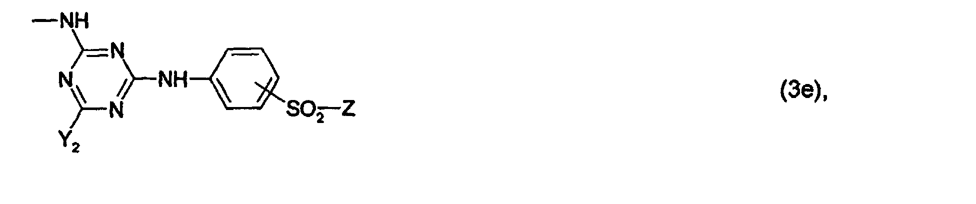 sind, und Hal und Y₂ Halogen, Z ein Rest der Formel -CH₂CH₂-U oder -CH=CH₂ und U -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ ist, 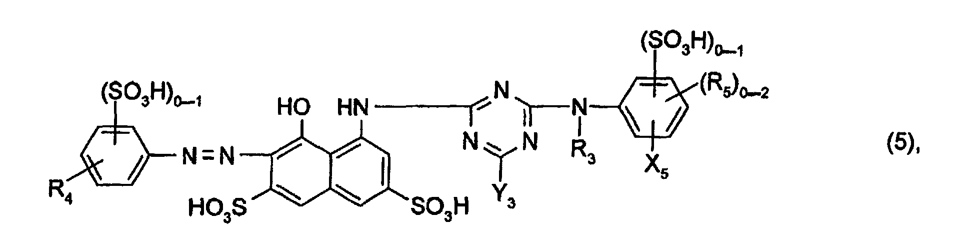 worin
R₃ Wasserstoff oder C₁-C₄-Alkyl,
R₄ gegebenenfalls im Phenylring durch C₁-C₄-Alkyl, C₁-C₄-Alkoxy, Nitro, Halogen oder Sulfo substituiertes Phenylamino,
(R₅)₀₋₂ für 0 bis 2 gleiche oder voneinander verschiedene Substituenten ausgewählt aus der Gruppe C₁-C₄-Alkyl und C₁-C₄-Alkoxy stehen,
X₅ einen faserreaktiven Rest der Formel (3a), (3b), (3c) oder (3d) und
Y₃ Halogen bedeuten, und 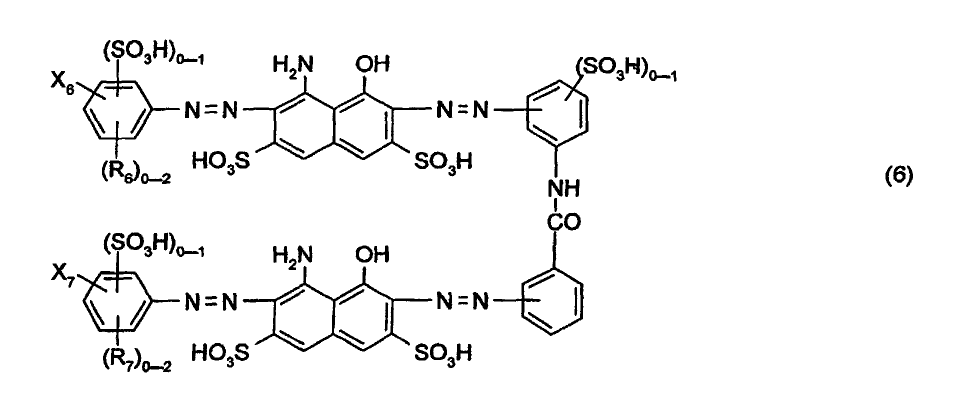 enthalten, worin
(R₆)₀₋₂ und (R₇)₀₋₂ unabhängig voneinander für 0 bis 2 gleiche oder voneinander verschiedene Substituenten ausgewählt aus der Gruppe C₁-C₄-Alkyl und C₁-C₄-Alkoxy stehen und
X₆ und X₇ unabhängig voneinander jeweils einen faserreaktiven Rest der Formel (3a), (3b), (3c) oder (3d) bedeuten,
mit der Massgabe, dass die Farbstoffmischungen keine wesentliche Menge eines Reaktivfarbstoffs der Formel 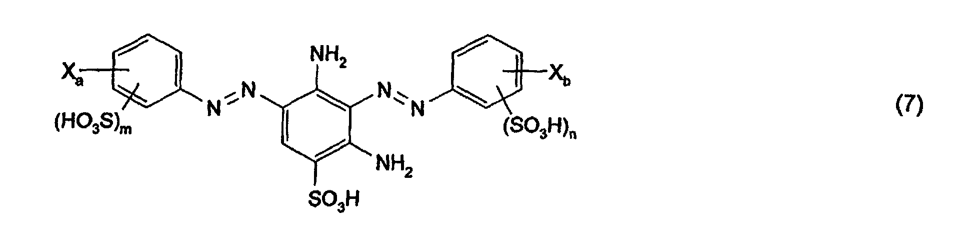 enthalten, worin
Xₐ und X_{b} unabhängig voneinander α,β-Dibrompropionylamino oder β-Sulfatoethylsulfonyl sind und die Summe von m und n 0 oder 1 ist,
falls die Farbstoffmischungen einen Farbstoff der Formel 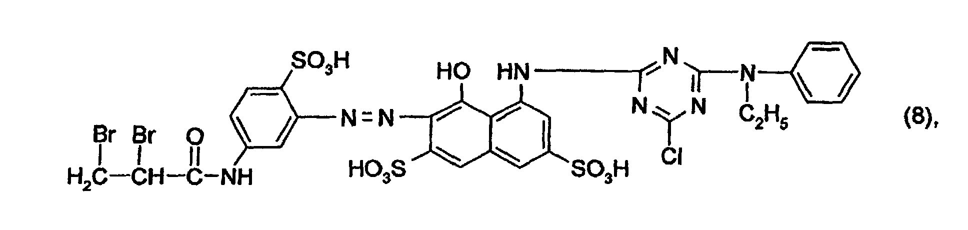 zusammen mit mindestens einem der beiden Farbstoffe der Formel (4) enthalten, worin
p und q jeweils 0,
R₁ und R₂ Wasserstoff und
X₃ und X₄ β-Sulfatoethylsulfonyl sind, oder
p und q jeweils 1,
R₁ und R₂ Wasserstoff und
X₃ und X₄ α,β-Dibrompropionylamino bedeuten, wobei
die Reste D₃ und D₄ der Farbstoffe der Formel (4) Phenylreste sind.

2. Farbstoffmischungen gemäss Anspruch 1, **dadurch gekennzeichnet, dass** B Phenylen bedeutet.

3. Farbstoffmischungen gemäss einem der Ansprüche 1 und 2, **dadurch gekennzeichnet, dass** D₁ und D₂ unabhängig voneinander gegebenenfalls durch Sulfo oder einen faserreaktiven Rest der Formel (3a) oder (3b) substituiertes Phenyl bedeuten.

4. Farbstoffmischungen gemäss einem der Ansprüche 1 bis 3, **dadurch gekennzeichnet, dass** V gegebenenfalls im Phenylring durch C₁-C₄-Alkyl, C₁-C₄-Alkoxy, C₂-C₄-Alkanoylamino, Halogen oder Sulfo substituiertes Phenylamino oder N-C₁-C₄-Alkyl-N-phenylamino ist.

5. Farbstoffmischungen gemäss einem der Ansprüche 1 bis 4, **dadurch gekennzeichnet, dass** Hal Chlor oder Brom, insbesondere Brom, ist.

6. Farbstoffmischungen gemäss einem der Ansprüche 1 bis 5, **dadurch gekennzeichnet, dass** die Reste D₃ und D₄ Phenylreste sind.

7. Farbstoffmischungen gemäss einem der Ansprüche 1 bis 6, **dadurch gekennzeichnet, dass** U -Cl oder -OSO₃H, insbesondere -OSO₃H, ist.

8. Farbstoffmischungen gemäss einem der Ansprüche 1 bis 7, **dadurch gekennzeichnet, dass** Y₁ und Y₂ unabhängig voneinander Fluor, Chlor oder Brom, insbesondere Chlor, sind.

9. Farbstoffmischungen gemäss einem der Ansprüche 1 bis 8, **dadurch gekennzeichnet, dass** X₃ und X₄ unabhängig voneinander jeweils einen faserreaktiven Rest der Formel (3a), (3b), (3c) oder (3e), insbesondere der Formel (3a), (3b) oder (3c), bedeuten.

10. Farbstoffmischungen gemäss einem der Ansprüche 1 bis 9, **dadurch gekennzeichnet, dass** X₆ und X₇ unabhängig voneinander jeweils einen faserreaktiven Rest der Formel (3a), (3b) oder (3c), insbesondere der Formel (3c), bedeuten.

11. Farbstoffmischungen gemäss einem der Ansprüche 1 bis 10, **dadurch gekennzeichnet, dass** sie mindestens einen Reaktivfarbstoff der Formeln (1) und (2) zusammen mit mindestens einem Reaktivfarbstoff der Formel (4) enthalten.

12. Farbstoffmischungen gemäss einem der Ansprüche 1 bis 11, **dadurch gekennzeichnet, dass** sie mindestens einen Reaktivfarbstoff der Formeln (1a) und (2a) 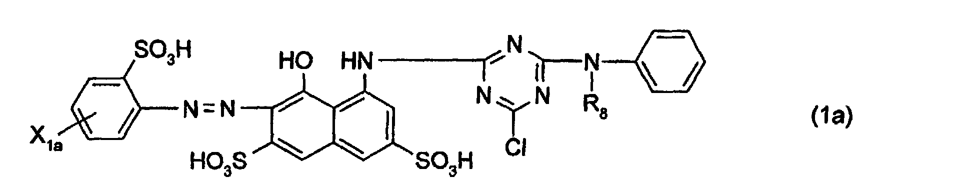 und 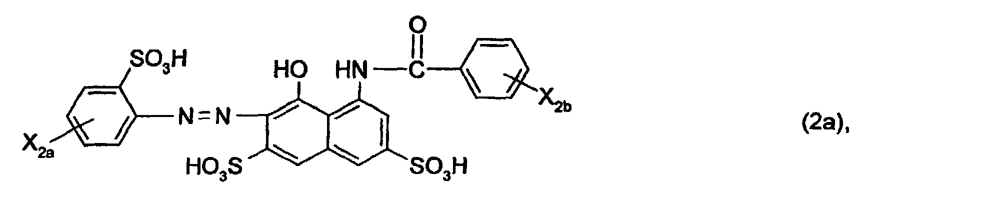 worin
X₁ₐ, X₂ₐ und X_{2b} unabhängig voneinander α,β-Dibrompropionylamino oder α-Bromacryloylamino sind und R₈ Wasserstoff, Methyl oder Ethyl bedeuten, zusammen mit mindestens einem Reaktivfarbstoff der Formeln (4a), (4b) und (4c) 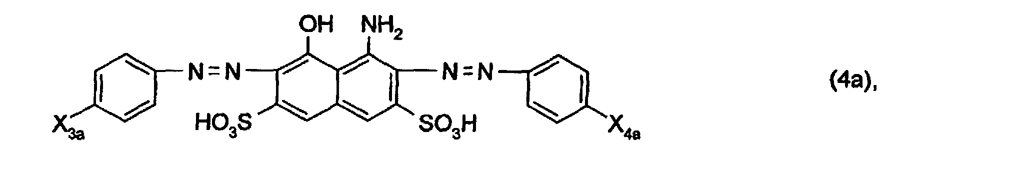 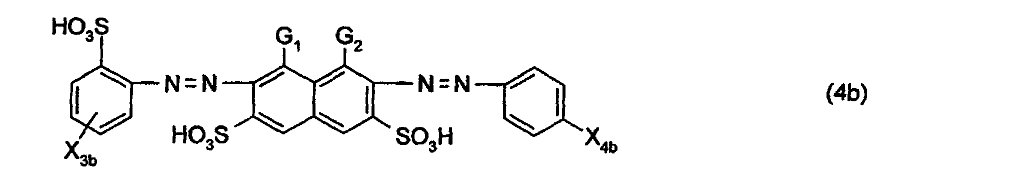 und 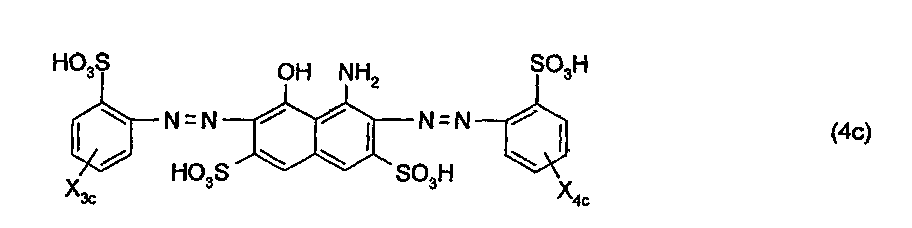 enthalten, worin
einer der Substituenten G₁ und G₂ Amino und der andere Hydroxy bedeutet,
X₃ₐ, X₄ₐ und X_{4b} unabhängig voneinander β-Sulfatoethylsulfonyl oder Vinylsulfonyl und
X_{3b}, X_{3c} und X_{4c} unabhängig voneinander α,β-Dibrompropionylamino oder α-Bromacryloylamino sind.

13. Farbstoffmischungen gemäss Anspruch 12, **dadurch gekennzeichnet, dass** sie mindestens einen Reaktivfarbstoff der Formeln (1a) und (2a) zusammen mit mindestens einem Reaktivfarbstoff der Formel (4a) enthalten.

14. Farbstoffmischungen gemäss einem der Ansprüche 1 bis 13, **dadurch gekennzeichnet, dass** sie zusätztlich mindestens einen Reaktivfarbstoff der Formel (9) 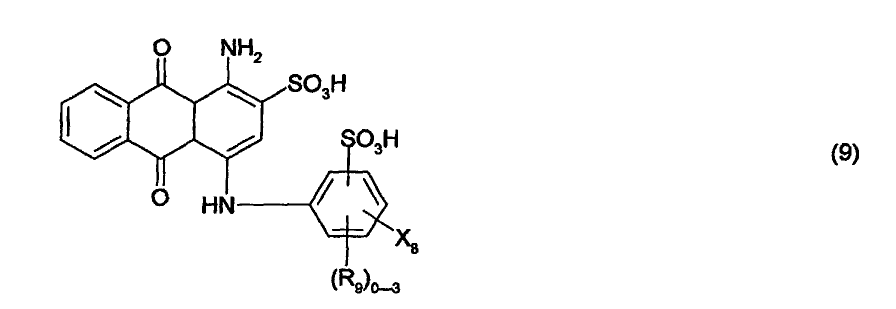 enthalten, worin
(R₉)₀₋₃ für 0 bis 3 gleiche oder voneinander verschiedene Substituenten ausgewählt aus der Gruppe C₁-C₄-Alkyl und C₁-C₄-Alkoxy steht und
X₈ einen Rest der Formel (3a) oder (3b) bedeutet.

15. Farbstoffmischungen gemäss Anspruch 14, **dadurch gekennzeichnet, dass**
(R₉)₀₋₃ für 0 bis 3 Methylreste steht und
X₈ α,β-Dibrompropionylamino oder α-Bromacryloylamino bedeutet.

16. Verfahren zum Färben oder Bedrucken von hydroxylgruppenhaltigem oder stickstoffhaltigem Fasermaterial, **dadurch gekennzeichnet, dass** man
eine Farbstoffmischung gemäss Anspruch 1 verwendet.

17. Verfahren gemäss Anspruch 16, **dadurch gekennzeichnet, dass** das Fasermaterial natürliches oder synthetischen Polyamidfasermaterial ist.

18. Verfahren gemäss Anspruch 16, **dadurch gekennzeichnet, dass** das Fasermaterial cellulosisches Fasermaterial ist.

## Claims

1. A dye mixture which comprises at least one reactive dye of formulae (1) and (2) 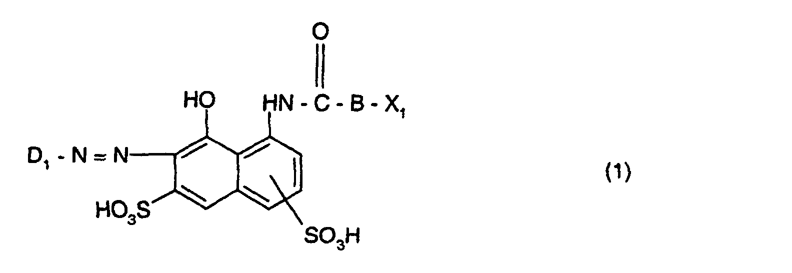 and 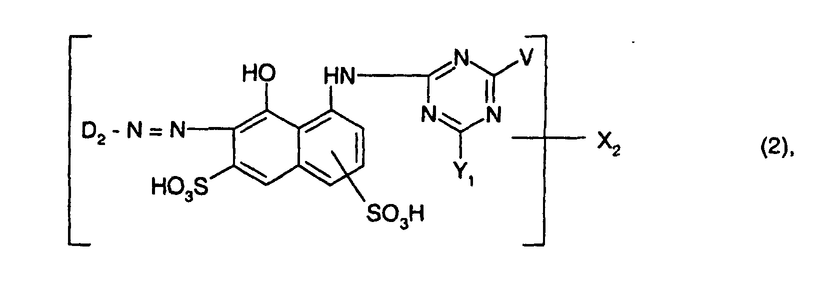 in which
B is phenylene which is unsubstituted or substituted by C₁-C₄alkyl, C₁-C₄alkoxy, C₂-C₄alkanoylamino, amino or halogen,
D₁ and D₂ are each independently of the other phenyl or naphthyl each of which is unsubstituted or substituted by C₁-C₄alkyl, C₁-C₄alkoxy, C₂-C₄alkanoylamino, sulfo or a fibre-reactive radical of formula (3a), (3b), (3c) or (3d) below,
V is amino, or is phenylamino or N-C₁-C₄alkyl-N-phenylamino each of which is unsubstituted or substituted in the phenyl ring by C₁-C₄alkyl, C₁-C₄alkoxy, C₂-C₄alkanoylamino, hydroxyl, carboxyl, sulfo or halogen, or is N-mono- or N,N-di-C₁-C₄alkylamino each of which is unsubstituted or substituted in the alkyl moiety by C₂-C₄alkanoylamino, C₁-C₄alkoxy, hydroxyl, sulfo, sulfato or carboxyl, or is C₅-C₇cycloalkylamino which is unsubstituted or substituted in the cycloalkyl ring by C₁-C₄alkyl or is N heterocycles with or without further heteroatoms,
X₁ and X₂ are each independently of the other a fibre-reactive radical of formula
-NH-CO-CH(Hal)-CH₂-Hal (3a)
or
-NH-CO-C(Hal)=CH₂ (3b),
where Hal is halogen, and
Y₁ is halogen;
together with at least one reactive dye of formulae (4), (5) and (6) 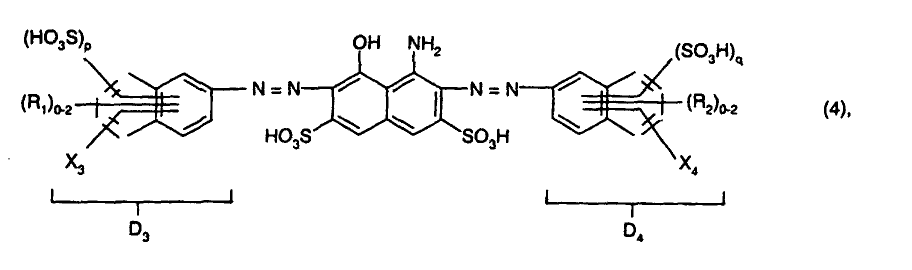 in which
(R₁)₀₋₂ and (R₂)₀₋₂ are each independently of one another 0 to 2 identical or different substituents selected from the group consisting of C₁-C₄alkyl and C₁-C₄alkoxy,
p and q are each independently of the other the number 0, 1 or 2,
X₃ and X₄ are each independently of the other hydrogen or a fibre-reactive radical of formula (3a), (3b), (3c), (3d) or (3e)
-NH-CO-CH(Hal)-CH₂-Hal (3a),
-NH-CO-C(Hal)=CH₂ (3b),
-SO₂-Z (3c),
-CO-NH-(CH₂)₂₋₃-SO₂-Z (3d)
or 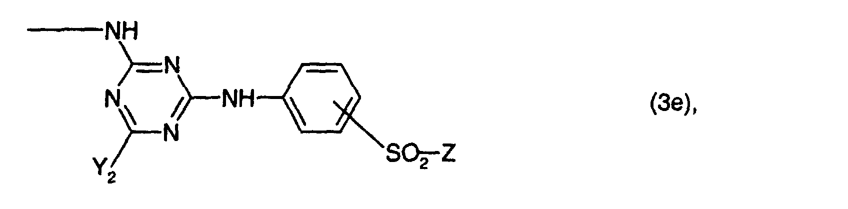 and Hal and Y₂ are halogen, Z is a radical of formula -CH₂CH₂-U or -CH=CH₂, and U is -Cl, -Br, - F, -OSO₃H, -SSO₃H, -OCO-CH₃, -OPO₃H₂, -OCO-C₆H₅, -OSO₂-C₁-C₄alkyl or -OSO₂-N(C₁-C₄alkyl)₂, 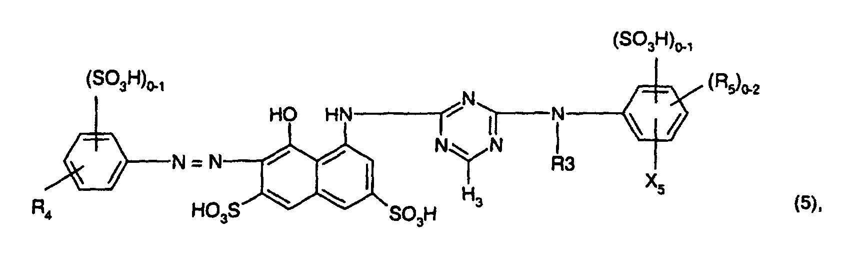 in which
R₃ is hydrogen or C₁-C₄alkyl,
R₄ is phenylamino which is unsubstituted or substituted in the phenyl ring by C₁-C₄alkyl, C₁-C₄alkoxy, nitro, halogen or sulfo,
(R₅)₀₋₂ is 0 to 2 identical or different substituents selected from the group consisting of C₁-C₄alkyl and C₁-C₄alkoxy,
X₅ is a fibre-reactive radical of formula (3a), (3b), (3c) or (3d), and
Y₃ is halogen, and 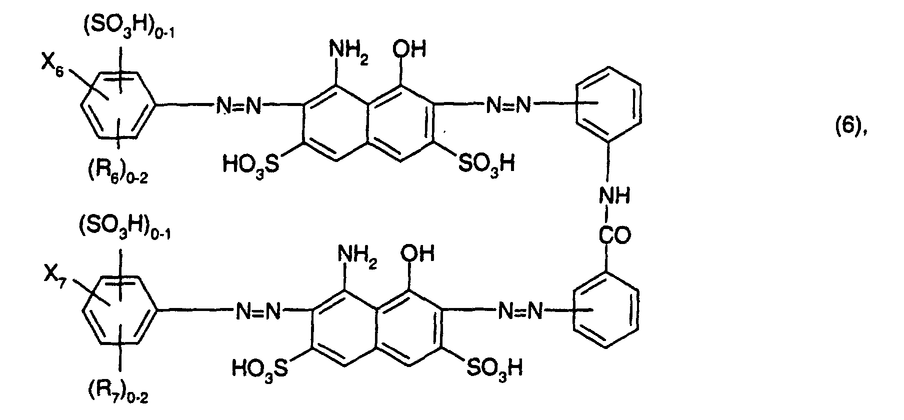 in which
(R₆)₀₋₂ and (R₇)₀₋₂ are each independently of one another 0 to 2 identical or different substituents selected from the group consisting of C₁-C₄alkyl and C₁-C₄alkoxy, and
X₆ and X₇ are each independently of the other a fibre-reactive radical of formula (3a), (3b), (3c) or (3d),
with the proviso that the dye mixture does not contain any substantial amount of a reactive dye of formula 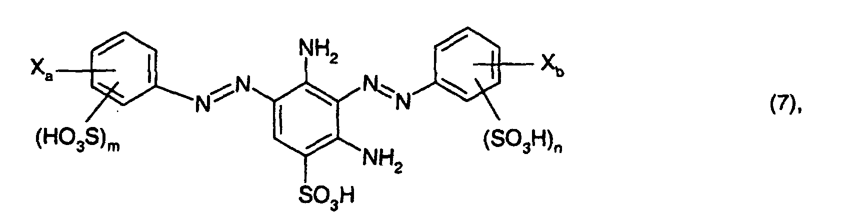 in which
Xₐ and X_{b} are each independently of the other α,β-dibromopropionylamino or β-sulfatoethylsulfonyl, and the sum of m and n is 0 or 1,
if the dye mixture comprises a dye of formula 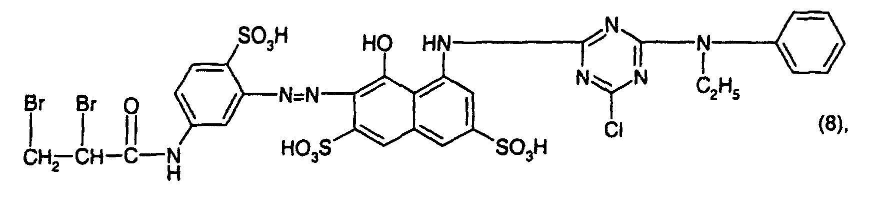 together with at least one of the two dyes of formula (4) in which
p and q are each 0,
R₁ and R₂ are hydrogen, and
X₃ and X₄ are β-sulfatoethylsulfonyl, or
p and q are each 1,
R₁ and R₂ are hydrogen, and
X₃ and X₄ are α,β-dibromopropionylamino,
D₃ and D₄ of the dyes of formula (4) being phenyl radicals.

2. A dye mixture according to claim 1, wherein B is phenylene.

3. A dye mixture according to either claim 1 or claim 2, wherein D₁ and D₂ are each independently of the other phenyl which is unsubstituted or substituted by sulfo or by a fibre-reactive radical of formula (3a) or (3b).

4. A dye mixture according to any one of claims 1 to 3, wherein V is phenylamino or N-C₁-C₄alkyl-N-phenylamino, each of which is unsubstituted or substituted in the phenyl ring by C₁-C₄alkyl, C₁-C₄alkoxy, C₂-C₄alkanoylamino, halogen or sulfo.

5. A dye mixture according to any one of claims 1 to 4, wherein Hal is chloro or bromo, preferably bromo.

6. A dye mixture according to any one of claims 1 to 5, wherein D₃ and D₄ are phenyl radicals.

7. A dye mixture according to any one of claims 1 to 6, wherein U is -Cl or -OSO₃H, preferably -OSO₃H.

8. A dye mixture according to any one of claims 1 to 7, wherein Y₁ and Y₂ are each independently of the other fluoro, chloro or bromo, preferably chloro.

9. A dye mixture according to any one of claims 1 to 8, wherein X₃ and X₄ are each independently of the other a fibre-reactive radical of formula (3a), (3b), (3c) or (3e), preferably of formula (3a), (3b) or (3c).

10. A dye mixture according to any one of claims 1 to 9, wherein X₆ and X₇ are each independently of the other a fibre-reactive radical of formula (3a), (3b) or (3c), preferably of formula (3c).

11. A dye mixture according to any one of claims 1 to 10, which comprises at least one reactive dye of formulae (1) and (2) together with at least one reactive dye of formula (4).

12. A dye mixture according to any one of claims 1 to 13, which comprises at least one reactive dye of formulae (1a) and (2a). 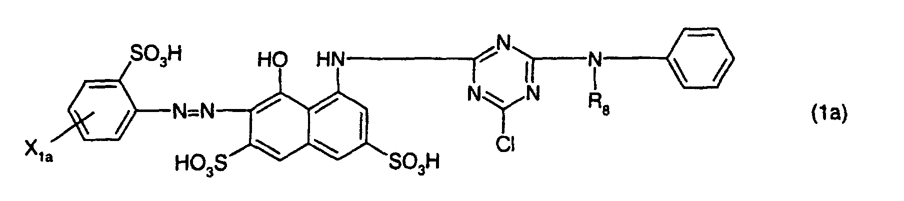 and 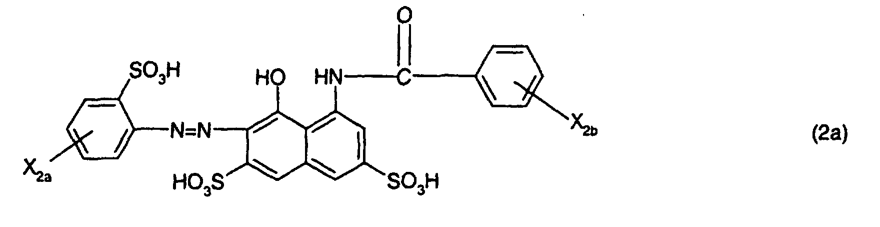 in which
X₁ₐ, X₂ₐ and X_{2b} are each independently of one another α,β-dibromopropionylamino or α-bromoacryloylamino, and R₈ is hydrogen, methyl or ethyl,
together with at least one reactive dye of formula (4a), (4b) and (4c) 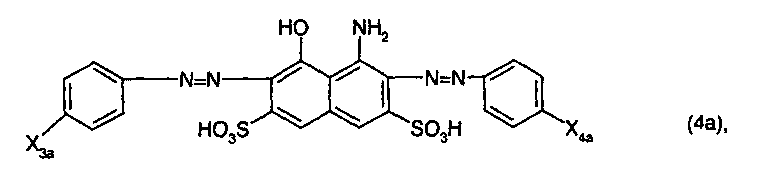 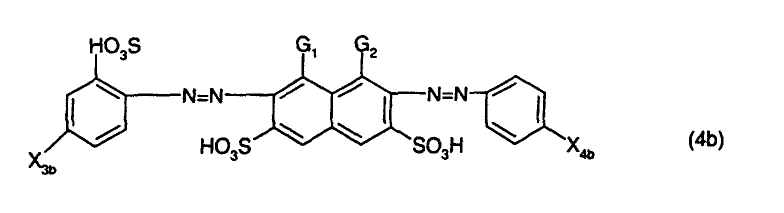 and 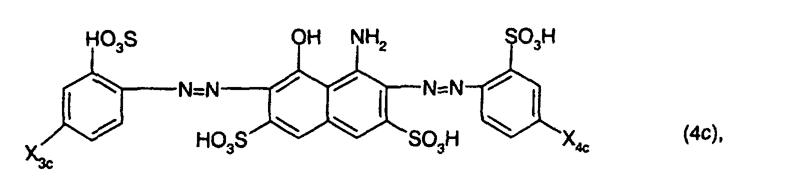 in which
one of the substituents G₁ and G₂ is amino and the other is hydroxy,
X₃ₐ, X₄ₐ and X_{4b} are each independently of one another sulfatoethylsulfonyl or vinylsulfonyl, and
X_{3b}, X_{3c} and X_{4c} are each independently of one another α,β-dibromopropionylamino or α-bromoacryloylamino.

13. A dye mixture according to claim 12, which comprises at least one reactive dye of formulae (1a) and (2a) together with at least one reactive dye of formula (4a).

14. A dye mixture according to any one of claims 1 to 13, which additionally comprises at least one reactive dye of formula (9) 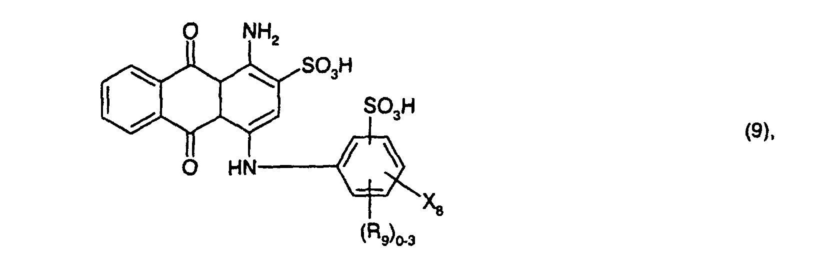 in which
(R₉)₀₋₃ is 0 to 3 identical or different substituents selected from the group consisting of C₁-C₄alkyl and C₁-C₄alkoxy, and
X₈ is a radical of formula (3a) or (3b).

15. A dye mixture according to claim 14, wherein
(R₉)₀₋₃ is 0 to 3 methyl radicals, and
X₈ is α,β-dibromopropionylamino or α-bromoacryloylamino.

16. A process for dyeing or printing hydroxyl-containing or nitrogen-containing fibre material, which comprises using a dye mixture according to claim 1.

17. A process according to claim 16, wherein the fibre material is natural or synthetic polyamide fibre material.

18. A process according to claim 16, wherein the fibre material is cellulosic fibre material.

## Revendications

1. Mélanges de colorants, **caractérisés en ce qu'**ils contiennent au moins un colorant réactif de formules (1) et (2) 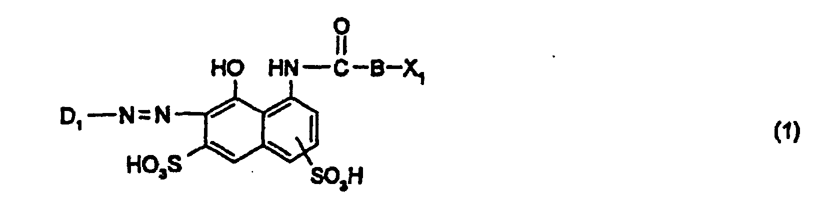 et 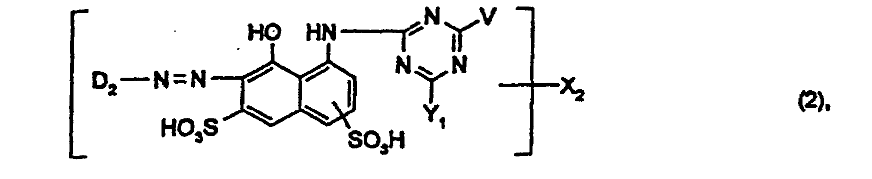 où
B représente un groupe phénylène non substitué ou substitué par des substituants alkyle en C₁-C₄, alkoxy en C₁-C₄, (alcanoyl en C₂-C₄)amino, amino ou halogène,
D₁ et D₂ représentent, indépendamment l'un de l'autre, un groupe phényle ou naphtyle éventuellement substitué par des substituants alkyle en C₁-C₄, alkoxy en C₁-C₄, (alcanoyl en C₂-C₄)amino, sulfo ou un reste réactif sur la fibre de formule (3a), (3b), (3c) ou (3d) données ci-après,
V représente un groupe amino, un groupe phénylamino ou N-(alkyl en C₁-C₄)-N-phénylamino éventuellement substitué dans le cycle phényle par des substituants alkyle en C₁-C₄, alkoxy en C₁-C₄, (alcanoyl en C₂-C₄)amino, hydroxy, carboxy, sulfo ou halogène, N-mono- ou N,N-di-(alkyl en C₁-C₄)amino éventuellement substitué dans le fragment alkyle par des substituants (alcanoyl en C₂-C₄)amino, alkoxy en C₁-C₄, hydroxy, sulfo, sulfato ou carboxy, un groupe cyclo(alkyl en C₅-C₇)amino éventuellement substitué dans le cycle cycloalkyle par un substituant alkyle en C₁-C₄, ou N-hétérocyclène éventuellement présentant d'autres hétéroatomes,
X₁ et X₂ représentent chacun, indépendamment l'un de l'autre, un reste réactif sur la fibre de formule
-NH-CO-CH(Hal)-CH₂-Hal (3a)
ou
-NH-CO-C(Hal)=CH₂ (3b)
où
Hal représente un atome d'halogène, et
Y₁ représente un atome d'halogène ;
conjointement avec au moins un colorant réactif de formules (4), (5) et (6) 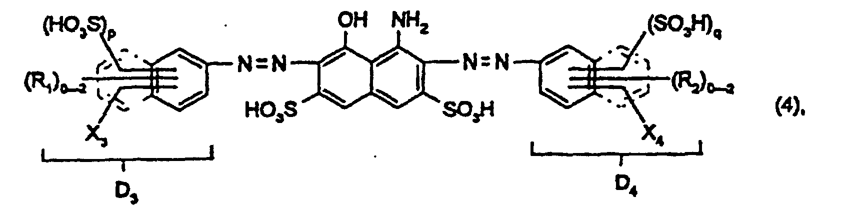 où
(R₁)₀₋₂ et (R₂)₀₋₂ représentent, indépendamment l'un de l'autre, 0 à 2 substituants identiques ou différents pris dans le groupe comprenant alkyle en C₁-C₄ et alkoxy en C₁-C₄,
p et q valent chacun, indépendamment l'un de l'autre, 0, 1 ou 2,
X₃ et X₄ représentent chacun, indépendamment l'un de l'autre, un atome d'hydrogène ou un reste réactif sur la fibre de formules (3a), (3b), (3c), (3d) ou (3e)
-NH-CO-CH(Hal)-CH₂-Hal (3a),
-NH-CO-C(Hal)=CH₂ (3b),
-SO₂-Z (3c),
-CO-NH-(CH₂)₂₋₃-SO₂-Z (3d)
ou 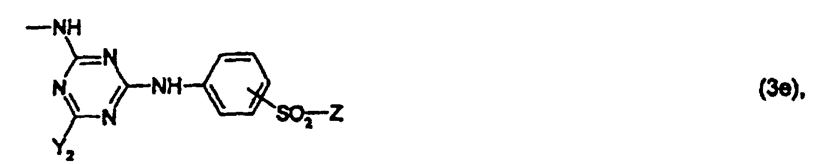
et Hal et Y₂ représentent un atome d'halogène, Z représente un reste de formule -CH₂CH₂-U ou -CH=CH₂- et
U représente des groupes -Cl, -Br, -F, -OSO₃H, -SSO₃H, -OCO-CH₃, -OPO₃H₂, -OCO-C₆H₅, -OSO₂-alkyle en C₁-C₄ ou -OSO₂-N-(alkyle en C₁-C₄)₂, 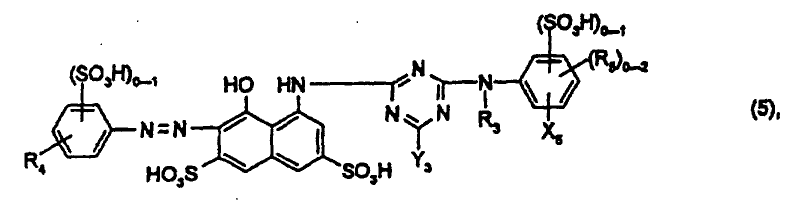
où
R₃ représente un atome d'hydrogène ou un groupe alkyle en C₁-C₄,
R₄ représente un groupe phénylamino éventuellement substitué dans le cycle phényle par des substituants alkyle en C₁-C₄, alkoxy en C₁-C₄, nitro, halogène ou sulfo,
(R₅)₀₋₂ représente 0 à 2 substituants identiques ou différents pris dans le groupe comprenant alkyle en C₁-C₄ et alkoxy en C₁-C₄,
X₅ représente un reste réactif sur la fibre de formules (3a), (3b), (3c) ou (3d) et
Y₃ représente un atome d'halogène, et contient 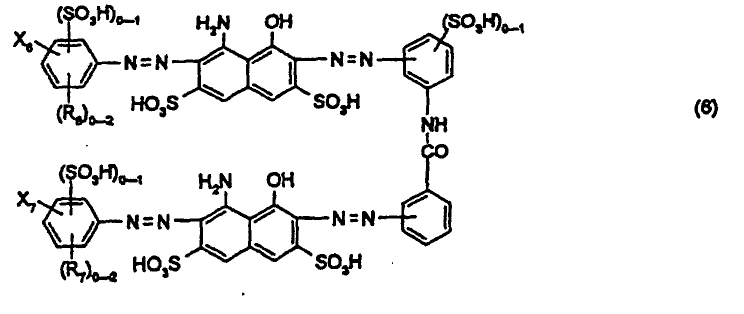
où
(R₆)₀₋₂ et (R₇)₀₋₂ représentent, indépendamment l'un de l'autre, 0 à 2 substituants identiques ou différents pris dans le groupe comprenant alkyle en C₁-C₄ et alkoxy en C₁-C₄ et
X₆ et X₇ représentent chacun, indépendamment l'un de l'autre, un reste réactif sur la fibre de formules (3a), (3b), (3c) ou (3d),
à condition que les mélanges de colorants ne contiennent pas de quantités significatives d'un colorant réactif de formule 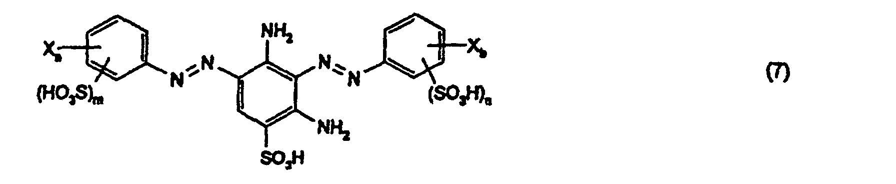 où
Xₐ et X_{b} représentent, indépendamment l'un de l'autre, des groupes α,β-dibromopropionylamino ou β-sulfatoéthylsulfonyle et la somme de m et n est égale à 0 ou 1,
dans le cas où les mélanges de colorants contiennent un colorant de formule 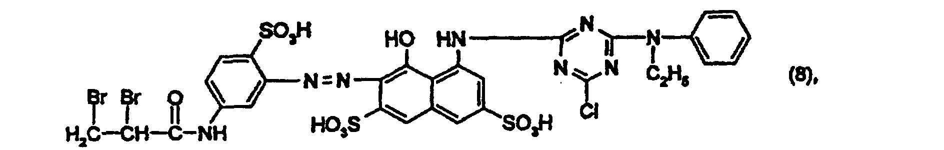 conjointement avec au moins un des deux colorants de formule (4), où
p et q valent chacun 0,
R₁ et R₂ représentent un atome d'hydrogène, ou
X₃ et X₄ représentent un groupe β-sulfatoéthylsulfonyle, ou
p et q valent chacun 1,
R₁ et R₂ représentent un atome d'hydrogène et
X₃ et X₄ représentent un groupe α,β-dibromopropionylamino, où
les restes D₃ et D₄ des colorants de formule (4) représentent des restes phényle.

2. Mélanges de colorants selon la revendication 1, **caractérisés en ce que** B représente un groupe phénylène.

3. Mélanges de colorants selon l'une des revendications 1 ou 2, **caractérisés en ce que** D₁ et D₂ représentent, indépendamment l'un de l'autre, un groupe phényle éventuellement substitué par un substituant sulfo ou un reste réactif sur la fibre de formule (3a) ou (3b).

4. Mélanges de colorants selon l'une des revendications 1 à 3, **caractérisés en ce que** V représente un groupe phénylamino ou N-(alkyl en C₁-C₄)-N-phénylamino éventuellement substitué dans le cycle phényle par des substituants alkyle en C₁-C₄, alkoxy en C₁-C₄, (alcanoyl en C₂-C₄)amino, halogène ou sulfo.

5. Mélanges de colorants selon l'une des revendications 1 à 4, **caractérisés en ce que** Hal représente un atome de chlore ou de brome, en particulier de brome.

6. Mélanges de colorants selon l'une des revendications 1 à 5, **caractérisés en ce que** les restes D₃ et D₄ sont des restes phényle.

7. Mélanges de colorants selon l'une des revendications 1 à 6, **caractérisés en ce que** U représente un groupe -Cl ou -OSO₃H, en particulier -OSO₃H.

8. Mélanges de colorants selon l'une des revendications 1 à 7, **caractérisés en ce que** Y₁ et Y₂ représentent, indépendamment l'un de l'autre, des atomes de fluor, de chlore ou de brome, notamment de chlore.

9. Mélanges de colorants selon l'une des revendications 1 à 8, **caractérisés en ce que** X₃ et X₄ représentent chacun, indépendamment l'un de l'autre, un reste réactif sur la fibre de formules (3a), (3b), (3c), (3d) ou (3e), en particulier de formules (3a), (3b) ou (3c).

10. Mélanges de colorants selon l'une des revendications 1 à 9, **caractérisés en ce que** X₆ et X₇ représentent chacun, indépendamment l'un de l'autre, un reste réactif sur la fibre de formules (3a), (3b) ou (3c), en particulier de formule (3c).

11. Mélanges de colorants selon l'une des revendications 1 à 10, **caractérisés en ce qu'**ils contiennent au moins un reste réactif sur la fibre de formules (1) et (2) conjointement avec au moins un colorant réactif de formule (4).

12. Mélanges de colorants selon l'une des revendications 1 à 11, **caractérisés en ce qu'**ils contiennent au moins un reste réactif sur la fibre de formules (1a) et (2a) 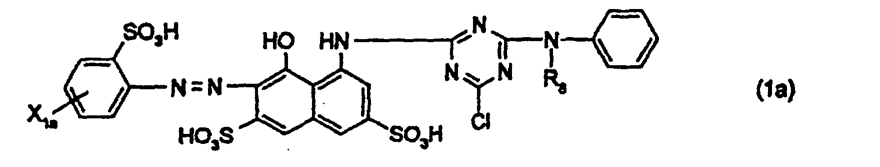 et 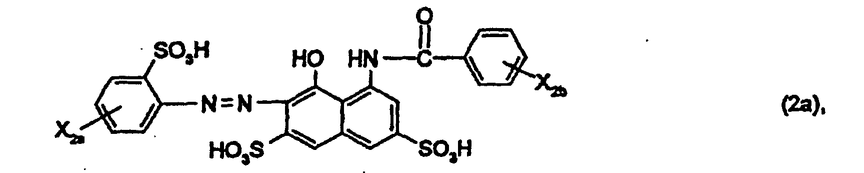 où
X₁ₐ, X₂ₐ et X_{2b} représentent, indépendamment l'un de l'autre, des groupes α,β-dibromopropionylamino ou α-bromacryloylamino et R₈ représente des groupes hydrogène, méthyle ou éthyle,
conjointement avec au moins un colorant réactif de formules (4a), (4b) et (4c) 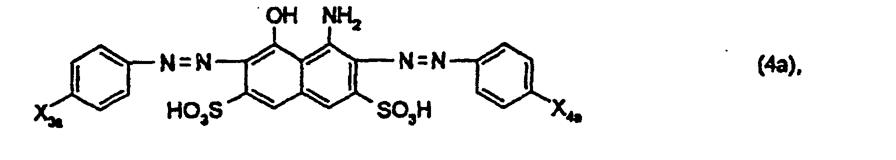 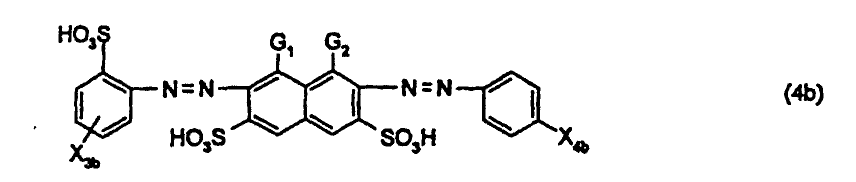 et 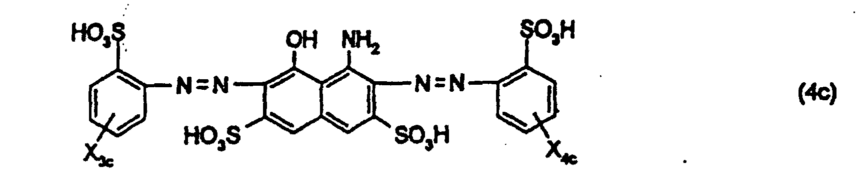 où
un des substituants G₁ et G₂ représente un groupe amino et l'autre un groupe hydroxy,
X₃ₐ, X₄ₐ et X_{4b} représentent, indépendamment l'un de l'autre, un groupe β-sulfatoéthylsulfonyle ou vinylsulfonyle et
X_{3b}, X_{3c} et X_{4c} représentent, indépendamment l'un de l'autre, un groupe α,β-dibromopropionylamino ou α-bromacryloylamino.

13. Mélanges de colorants selon la revendication 12, **caractérisés en ce qu'**ils contiennent au moins un colorant réactif de formules (1a) et (2a) conjointement avec un colorant réactif de formule (4a).

14. Mélanges de colorants selon l'une des revendications 1 à 13, **caractérisés en ce qu'**ils contiennent au moins un colorant réactif de formule (9) 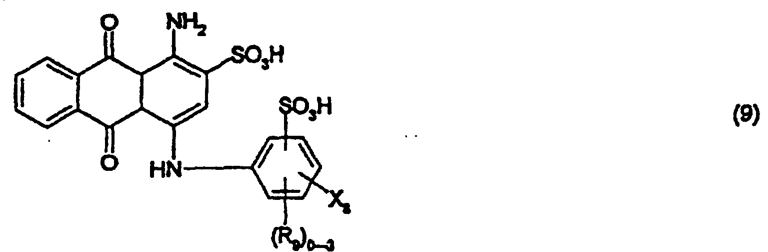 où
(R₉)₀₋₃ représente 0 à 3 substituants identiques ou différents pris dans le groupe comprenant alkyle en C₁-C₄ et alkoxy en C₁-C₄ et
X₈ représente un reste de formule (3a) ou (3b).

15. Mélanges de colorants selon la revendication 14, **caractérisés en ce que**
(R₉)₀₋₃ représente 0 à 3 restes méthyle et
X₈ représente un groupe α,β-dibromopropionylamino ou α-bromacryloylamino.

16. Procédé pour la teinture ou l'impression d'une matière fibreuse azotée ou hydroxylée, **caractérisé en ce qu'**on utilise un mélange de colorants selon la revendication 1.

17. Procédé selon la revendication 16, **caractérisé en ce que** la matière fibreuse est une matière fibreuse polyamide naturel ou synthétique.

18. Procédé selon la revendication 16, **caractérisé en ce que** la matière fibreuse est une matière fibreuse cellulosique.
